(19) Europäisches Patentamt
European Patent Office
Office européen des brevets

(11) Publication number: 0 128 635 B1

# (12) EUROPEAN PATENT SPECIFICATION

(45) Date of publication of patent specification: 14.12.88

(51) Int. Cl.[4]: G 01 H 5/00, G 01 H 3/12, G 01 K 11/22

(21) Application number: 84301591.8

(22) Date of filing: 09.03.84

## (54) Measuring non-linear parameter of acoustic medium.

(30) Priority: 10.03.83 JP 39907/83

(43) Date of publication of application: 19.12.84 Bulletin 84/51

(45) Publication of the grant of the patent: 14.12.88 Bulletin 88/50

(84) Designated Contracting States: DE FR GB NL SE

(56) References cited:

PROCEEDINGS ISMIII 1982, 1ST INTERNATIONAL SYMPOSIUM ON MEDICAL IMAGING AND IMAGE INTERPRETATION, 26th-28th October 1982, pages 454-459, Berlin, DE; T. SATO et al.: "Nonlinear parameter tomography, active incoherent imaging and adaptive imaging for ultrasonic tissue characterization"

PHYSICS IN MEDICINE & BIOLOGY, vol. 22, no. 2, March 1977, pages 327-340, Londen, GB; T.D. SACHS et al.

(73) Proprietor: FUJITSU LIMITED
1015, Kamikodanaka Nakahara-ku
Kawasaki-shi Kanagawa 211 (JP)

(72) Inventor: Sato, Takuso c/o FUJITSU LIMITED
Patent Department 1015 Kamikodanaka
Nakahara-ku Kawasaki-shi Kanagawa 211 (JP)
Inventor: Ichida, Nobuyuki c/o FUJITSU LIMITED
Patent Department 1015 Kamikodanaka
Nakahara-ku Kawasaki-shi Kanagawa 211 (JP)
Inventor: Miwa, Hirohide c/o FUJITSU LIMITED
Patent Department 1015 Kamikodanaka
Nakahara-ku Kawasaki-shi Kanagawa 211 (JP)

(74) Representative: Sunderland, James Harry et al
HASELTINE LAKE & CO Hazlitt House 28
Southampton Buildings Chancery Lane
London WC2A 1AT (GB)

(56) References cited:

APPLIED PHYSICS LETTERS, vol. 41, no. 10, 15th November 1982, pages 915-917, American Institute of Physics, New York, US; D. HUSSON et al.: "Remote temperature measurement using an acoustic probe"

EP 0 128 635 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

JOURNAL OF THE ACOUSTICAL SOCIETY OF AMERICA, vol. 69, no. 4, April 1981, pages 1210-1212, New York, US; W.K. LAW et al.: "Ultrasonic determination of the nonlinearity parameter B/A for biological media"

JOURNAL OF THE ACOUSTICAL SOCIETY OF AMERICA, vol. 74, no. 5, November 1983, pages 1518-1522, New York, US; Z. ZHU et al.: "Determination of the acoustic nonlinearity parameter B/A form phase measurements"

JOURNAL OF THE ACOUSTICAL SOCIETY OF JAPAN, vol. 39, no. 8, August 1983, pages 521-530, Tokyo, JP; N. ICHIDA et al.: "Nonlinear parameter tomography"

**Description**

The present invention relates to measuring a non-linear parameter, and/or its distribution, of an acoustic medium.

Usually an ultrasonic apparatus, such as an ultrasonic tomograph, is designed on the assumption that sound speed is pressure independent. As a first approximation, sound speed can be regarded as a constant independent of pressure. As a first approximation, the density of an acoustic medium can also be regarded as independent of pressure for a liquid and solid medium such as tissue.

However, more accurately, sound speed is related to density (called dynamic density) at each infinitesimal part of the acoustic medium through which a sound wave propagates, and because a sound wave is a compressional wave the density of each part of the acoustic medium is varied by sound pressure.

The relationship between sound pressure and the density of a medium through which a sound wave propagates can be expressed as

$$\Delta p = A\Delta\rho + B\frac{\Delta\rho^2}{2} + \cdots$$

and this results in a nonlinear relationship between sound speed and pressure which can be expressed as

$$C = C_0 + \frac{1}{2\rho_0 C_0}(B/A)\cdot\Delta p \qquad (1)$$

In the above

$\Delta\rho$: dynamic density change caused by $\Delta p$;

$\Delta p$: dynamic sound pressure; that is, variation of pressure caused by a sound wave propagating in the acoustic medium;

C: sound speed as affected by dynamic sound pressure $\Delta p$;

$C_0$: sound speed (phase velocity) under static pressure; that is, sound speed of a sound wave of infinitesimally small amplitude propagating through the medium;

$\rho_0$: static density, density of the acoustic medium under static pressure; and

B/A: a non-linear parameter of the acoustic medium.

Equation (1) is based on a second order approximation, higher order terms are omitted from the equation. If the second order term are omitted, from equation (1), retaining only the first order term, a linear approximation results; that is, sound speed is pressure independent as mentioned above as "first approximation".

More details of non-linear acoustics were given, for example, by T. G. Muir, E. L. Carstensen in 1979 (Prediction of Nonlinear Acoustic Effects at Biomedical Frequencies and Intensities; Ultrasound in Med. & Biol., Vol. 6; Pergamon Press Ltd.).

The non-linear parameter B/A has become worthy of notice in the field of ultrasonic technology, because it can provide novel information relating to, for example: a structure, a coupling state, visco-elasticity, and temperature of biomedical tissue; a chemical state of body fluid; metabolism activity and so on.

However, the magnitude of B/A is so small that its measurement poses problems and it has been difficult to make practical use of B/A for providing such information.

To overcome this difficulty, a proposal concerning an equivalent non-linqar parameter $(B/A)_e$ was introduced by N. Ichida, T. Sato, O. Ikeda and M. Linzer (Ultrasonic Imaging of the Non-linear Parameter of Tissue Using Scanned Low Frequency Pumping Waves and High Frequency Probe Waves) at the 7th International Symposium On Ultrasonic Imaging and Tissue Characterization, held on Jan. 6—9, 1982, sponsored by NBS, and in Japanese Patent Application No. Tokugansho 57-167036, in 1982 (Ultrasonic Diagnostic Processing System) by the inventors. See also Proceedings of the 1st International Symposium on medical imaging and image interpretation, ISMII '82, Vol. 375, pages 454—459, Sato et al.

This proposal involved a new measuring method in which a second sound wave (pumping wave) is introduced into the acoustic medium in respect of which measurements are to be carried out, in order to detect the second term in equation (1).

Therefore, two kinds of sound wave are superimposed in the acoustic medium. One is a "probing wave" to measure the non-linear parameter of the medium, and the other is a "pumping wave" to generate the $\Delta p$ needed for the measurement. The amplitude of the pumping wave is made sufficiently greater than that of the probing wave as to enhance the non-linear parameter to make it easy to measure. The non-linear parameter measured in this way is called the "equivalent non-linear parameter $(B/A)_e$". Equation (1) modified in terms of this parameter is:

$$C = C_0 + \frac{1}{2\rho_0 C_0}\left(\frac{B}{A}\right)_e\cdot P \qquad (2),$$

where,

$(B/A)_e$ is an equivalent non-linear parameter;

P is sound pressure of the pumping wave; and

C, $C_0$, and $\rho_0$ are as defined in respect of equation (1).

The measuring method for the parameter $(B/A)_e$ of the above Japanese Patent Application will be described briefly.

A pumping wave consists of a continuous wave (CW), whose wave length is varied. A probing wave is also CW and is applied to the acoustic medium by a couple of ultrasonic transducers; one of which transmits the probing wave and the other of which receives the probing wave. The phase of the transmitted probing wave is modulated by the pumping wave as it crosses the probing wave beam through the acoustic medium. The parameter $(B/A)_e$ along the medium can be obtained by Fourier transformation of the phase deviations of the received probing wave caused by the pumping wave corresponding to the various wavelengths of the pumping wave.

This technology for measuring the parameter $(B/A)_e$, however, suffers the following problems with regard to the obtaining of good results speedily.

1) Frequency of the pumping wave has to be varied over a considerably wide range, but it is not so easy for the transducer to cover the necessary frequency band-width and still to transmit the pumping wave effectively.

2) The pumping wave has to be varied over many frequencies to get high resolution, so plenty of time is needed to accumulate data, and to perform Fourier transformation.

According to one aspect of the present invention, there is provided a method of measuring a non-linear parameter of an acoustic medium comprising processes:

A) providing a probing beam of a probing wave which is a continuous ultrasonic wave propagating through said acoustic medium;

B) providing an ultrasonic pumping wave which propagates through said acoustic medium so as to interact with said probing wave;

C) detecting phase changes of said probing wave as affected by said pumping wave; and

D) extracting the non-linear parameter of said acoustic medium from the detected phase changes of the probing wave, characterised in that the ultrasonic pumping wave is pulsed.

According to another aspect of the present invention there is provided an apparatus for measuring a non-linear parameter of an acoustic medium, comprising;

first means, providing a probing beam which is a continuous ultrasonic wave, propagating through said acoustic medium;

second means, providing an ultrasonic pumping wave propagating through said acoustic medium so as to interact with said probing wave;

third means, for detecting phase changes of said probing wave as affected by said pumping wave; and

fourth means, for extracting a distribution of said non-linear parameter on the basis of detected phase changes of the probing wave, characterised in that the second means provide a pulsed ultrasonic pumping wave.

Embodiments of the present invention can provide for the measurement of an "equivalent" non-linear parameter $(B/A)_e$ of an acoustic medium effectively and speedily.

Embodiments of the present invention can provide for the measurement of a conventionally defined (not equivalent) non-linear parameter (B/A) of an acoustic medium in a more practically convenient way.

Embodiments of the present invention can provide for the derivation of two/three dimensional image(s) of the acoustic non-linear parameter or the acoustic equivalent non-linear parameter.

Embodiments of the present invention can provide for the measurement of temperature of internal tissue noninvasively. Thus, temperature measurement of human or other biomedical tissue for ultrasonic diagnosis, hyperthermia, etc can be achieved.

Measuring apparatus embodying the present invention can provide for measurement of a non-linear characteristic of an acoustic medium such as biomedical tissue, measurement of space distribution of the non-linear parameter of the acoustic medium, and display of an image of the space distribution on a display unit.

For measurement of the equivalent non-linear parameter $(B/A)_e$ or the non-linear parameter (B/A) the present invention employs two method forms.

The first form, an intersecting wave method, for measuring the parameter $(B/A)_e$, involves applying a pulsed pumping wave instead of the prior art continuous pumping wave, and the pulsed pumping wave propagates so as to intersect the probing beam. Applying a pulsed pumping wave is equivalent to using many frequencies of pumping wave, and it is not necessary to vary a CW frequency time-consumingly.

This method is effected using a pair of transducers for the probing wave, and a transducer for the pumping wave. The former transducers are arranged face to face with one another across the acoustic medium to be measured, respectively transmitting and receiving the probing wave (probing beam). The latter transducer produces a wide beam of sound covering the measured region, and supplies pumping sound pressure to the medium uniformly and simultaneously.

The second form, an opposing wave method, for measuring the parameter (B/A) involves applying a pumping beam in which a pulsed pumping wave propagates in conter-direction to the direction of propagation of the probing wave. This method is performed by using a pair of transducers for the probing wave, and a pumping wave transducer located around the probing wave receiving transducer. Array type transducers can be employed.

An image of a space distribution of the parameter $(B/A)_e$ or (B/A) can be obtained by using a probing beam which scans the acoustic medium in one or two dimensions.

Measurement of internal temperature of an acoustic medium can be provided by taking referential data of the parameter $(B/A)_e$ or (B/A) measured previously as a function of (known) temperature in the acoustic medium such as biomedical tissue. Because the parameter $(B/A)_e$ or (B/A) is sensitive to temperature an image of internal medium temperature distribution can be obtained by the intermediation of $(B/A)_e$ or (B/A)

along the probing beam, in two or three dimensions in the same way as described above.

Reference is made, by way of example, to the accompanying drawings, in which:—

Fig. 1 is a diagram illustrating the principle of the first method form of the present invention, having a pumping wave which propagates perpendicularly to a probing beam,

Fig. 2 gives diagrammatical perspective views illustrating phase relationships between a probing wave and a pumping wave in the measuring method of Fig. 1,

Fig. 3 is a block diagram of a measuring apparatus embodying the present invention, using a pumping wave which propagates perpendicularly to the probing beam,

Fig. 4 is a waveform diagram showing waveforms of signals developed in the apparatus of Fig. 3,

Fig. 5 gives a diagram and graphs illustrating pressure and phase relationships for a spherical pumping wave on a Z axis at various times,

Fig. 6 is a waveform diagram illustrating waveforms of signal and noise at an input and an output of an adding circuit employed in an embodiment of the present invention using a pumping wave which propagates perpendicularly to the probing beam,

Fig. 7 is a block diagram of apparatus embodying the present invention which can offer an improved S/N ratio,

Fig. 8 is another block diagram of apparatus embodying the present invention having a pumping wave propagating perpendicularly to the probing beam, a scanning mechanism and a display unit for obtaining a representation of a two or three dimensional distribution of the equivalent non-linear parameter in an acoustic medium,

Fig. 9 is a diagram illustrating the principle of the second method form of the present invention, having a pumping wave which propagates along the probing beam in opposition thereto,

Fig. 10 illustrates a relationship between the pumping wave and the probing wave of the method form of Fig. 9,

Fig. 11(A) is a block diagram of measuring apparatus embodying the present invention using a pumping wave opposed to the probing beam,

Fig. 11(B) and Fig. 11(C) are a perspective view and a sectional view of a transducer structure combining a pumping transducer and a receiving probing transducer,

Fig. 12 is a block diagram of a Time Gain Control Amplifier (TGC) for use in apparatus embodying in present invention,

Fig. 13 is a block diagram of measuring apparatus embodying the present invention, comprising a scanning mechanism and a display unit for obtaining a representation of a two or three dimensional distribution of the equivalent non-linear parameter in an acoustic medium,

Figs. 14 to 16(B) give perspective views of various transducer structures for use in apparatus embodying the present invention using a pumping wave opposed to a probing beam,

Fig. 17 gives graphs showing frequency characteristics of a transducer which functions as both a probing and the pumping transducer in apparatus embodying the present invention using a pumping wave opposed to a probing beam, and

(A) illustrates total serviceable sound frequency band of the transducer,

(B) illustrates sound frequency band for pumping wave radiation,

(C) illustrates sound frequency band for probing wave reception,

Fig. 18 is a perspective view of a transducer which has a layer structure; a front layer is for a probing wave receiving transducer and a back layer is for a pumping transducer,

Fig. 19 shows a block diagram for a temperature measuring system embodying the present invention,

Fig. 20 shows a block diagram of a memory unit 12, used in the system of Fig. 19, and

Fig. 21 is a graph showing a conversion curve between apparent $(B/A)_a$ and $\Delta T$, contained in unit 20 of the system of Fig. 19.

Fig. 1 is a diagram illustrating a first measuring method form according to the present invention in which a pulsed pumping wave intersects a probing beam.

Usually, measurement is carried out in water, although water is not shown in Fig. 1, immersing the medium in respect of which measurement is to be effected (the measured medium) and measuring instruments, in the water.

This first method uses a pumping wave $W_P$ which is generated pulsively, and has a planar wave front, which propagates in the measured medium perpendicularly to the propagation path of a probing wave. In Fig. 1, 5 is a medium placed in water between a couple of probing wave transducers $X_A$ and $X_B$ which provide a probing beam in the direction of a Z axis. $X_A$ transmits a beam-shaped probing wave $W_m$ into the medium 5, and $X_B$ receives $W_m$ modulated by the sound pressure of pumping wave $W_P$ during passage through the medium 5. $W_P$ is radiated by a pumping wave transducer $X_P$ in the direction of a X axis. X, Y and Z axes are the axes of a rectangular coordinate system.

Under the above measuring conditions, the equivalent non-linear parameter $(B/A)_e$ is given from equation (2) as

$$\left(\frac{B}{A}\right)_e = 2\rho_0 C_0 \left(\frac{\sigma C_i}{\sigma P_j}\right)_s \qquad (3),$$

When the measured medium is not uniform, the parameter $(B/A)_e$ varies at each point in the medium in correspondence to the heterogeneity of the medium. The suffices i and j in equation (3) indicate that the quantities to which they refer are taken in mutually perpendicular directions, and suffix s means that the quantity to which it refers is taken "under isentropic conditions", that is under a quasistatic process, or in a process of adiabatic compression or expansion.

The conventionally defined non-linear parameter B/A in an acoustic field is given when i=j, as

$$\frac{B}{A}=2\rho_0 C_0\left(\frac{\sigma C_i}{\sigma P_i}\right)_s \quad (4).$$

If the medium is isotropic, the following relationship can be obtained,

$$\left(\frac{B}{A}\right)_e= 1+\left(\frac{2v-1}{1-v}\right)\cdot\frac{B}{A} \quad (5),$$

where v is Poisson's ratio. The value of v is about 0.5 for liquid or biomedical tissue, so it can be said that $(B/A)_e$ is almost equal to B/A if the acoustic (measured) medium is assumed to be biomedical tissue.

Therefore, ΔC, variation of sound speed owing to the pressure P of a pumping wave, can be seen to be

$$\Delta C=\frac{1}{2\rho_0 C_0}\left(\frac{B}{A}\right)_e\cdot P \quad (6),$$

In Fig. 1, for simplicity, it can be assumed that the sound pressure of $W_m$ is sufficiently less than the sound pressure of $W_P$ so that P in equation (2) or (6) depends only on the sound pressure of $W_P$.

In a period when the pumping wave $W_P$ (which is a pulse wave) intersects the probing beam, a sound speed change ΔC of the probing wave $W_m$ occurs. The value of ΔC varies at each position along the Z axis, and equation (6) can be expressed as

$$\Delta C(z)=\frac{1}{2\rho_0 C_0}\left(\frac{B}{A}\right)_e(z)\cdot P \quad (7),$$

where z is a coordinate value along the Z axis. Equation (7) means that the waveform of $W_m$ at each position along the Z axis suffers a phase change proportional to ΔC(z). $(B/A)_e(z)$ can then be estimated from phase information included in the output signal of the receiving transducer $X_B$. The value of P in equation (7) can be measured in advance in an equivalent liquid.

A more detailed consideration of the above points is given below.

Fig. 2 shows diagrammatically perspective views of a probing wave $W_m$ which is affected by sound pressure of a pumping wave $W_P$ as it propagates through an acoustic medium. The medium is assumed to be homogeneous.

Sound pressure of $W_P$ (as it affects the probing wave $W_m$) is a function of time, therefore P can be described as P(t), where t is time. At $z=z_0$ and when t=0, $W_m$ is affected by pressure P(0) (refer to Fig. 2 (A)). After a short time both the probing wave and pumping wave shift their positions, so that at t=Δt the point along the $W_m$ waveform which was at $z=z_0$ at $t=t_0$ is at

$$z=z_0+\Delta z=z_0+C_0\Delta t$$

and sound pressure as it affects the probing wave $W_m$ becomes P(t+Δt) (refer to Fig. 2(B)). In similar manner, $W_m$ is affected by sound pressure P as shown in Fig. 2(C) when t=2Δt, and as shown in Fig. 2(D) when t=3Δt, respectively.

From the above explanation, it can be said generally that a point on the probing wave $W_m$ positioned at $z_0$ at t=0, will suffer the following pressure change (that is, a change of sound velocity) at z:—

$$\Delta C(z)=\frac{1}{2\rho_0 C_0}\left(\frac{B}{A}\right)_e(z)\cdot P(\Delta t)$$

The value of ΔC(z) is (much) less than $C_0$, so Δt (time interval in which $W_m$ propagates from $z_0$ to z) is given by following approximate equation:

$$\Delta t=\frac{z-z_0}{C_0} \quad (8).$$

Therefore,

$$\Delta C(z)=\frac{1}{2\rho_0 C_0}\left(\frac{B}{A}\right)_e(z)\cdot P\left(\frac{z-z_0}{C_0}\right) \quad (9).$$

Therefore, when probing wave $W_m$ propagates from $z_0$ to z, a phase change of $W_m$ can be expressed as

$$\Delta\psi(z)_{z_0}=K\cdot\left(\frac{B}{A}\right)_e(z)\cdot P\left(\frac{z-z_0}{C_0}\right) \quad (10),$$

where,

K: constant of proportionality,

$\Delta\psi_{z_0}(z)$: phase change of $W_m$ as a function of z.

Total phase change of $W_m$ as the probing wave propagates in the acoustic medium from the transmitting transducer $X_A$ to the receiving transducer $X_B$ is given by

$$\phi(z_0)=\int_{-\infty}^{\infty}\Delta\psi_z(z)dz$$

$$=K\int_{-\infty}^{\infty}\left(\frac{B}{A}\right)_e(z)\cdot P\left(\frac{z-z_0}{C_0}\right)dz \quad (11).$$

Substituting the following function g into equation (11),

$$g(z_0-z)=P(\frac{z-z_0}{C}) \quad (12),$$

the following equation is obtained,

$$\Phi(z_0)=K\int_{-\infty}^{\infty}\left(\frac{B}{A}\right)_e(z)\cdot g(z_0-z)dz$$

$$=K\left\{\left(\frac{B}{A}\right)_e(z) * g(z)\right\} \quad (13).$$

Equation (13) is a so-called convolution integral. If Fourier transformation is applied to equation (13), the following equation can be obtained.

$$\psi(\omega)=K\cdot\left(\frac{B}{A}\right)_e(\omega)\cdot G(\omega) \quad (14),$$

where; $\psi(\omega)$, $(B/A)_e(\omega)$, $G(\omega)$ are respectively the Fourier transforms of $\phi(z)$, $(B/A)_e(z)$, and $g(z)$; and variable $\omega$ is space frequency along the coordinate axis Z.

From equation (14), the following relationships are obtained,

$$\left(\frac{B}{A}\right)_e(\omega)=\frac{1}{K}\ \frac{1}{G(\omega)}\Phi(\omega) \quad (15),$$

$$\left(\frac{B}{A}\right)_e(z)=\frac{1}{K}\ F^{-1}\left\{\frac{1}{G(\omega)}\Phi(\omega)\right\} \quad (16),$$

where $F^{-1}$ is an inverse Fourier transformation. From these equations, $(B/A)_e(z)$ can be obtained.

Equation (15) shows that $(B/A)_e$ can be obtained by filtering $\Phi(\omega)$ using a filter having a frequency characteristic such as $1/(KG(\omega))$, which means a characteristic the inverse of the pumping wave frequency characteristic. Therefore, an inverse Fourier transformation as in equation (16) is not necessary to obtain $(B/A)_e(z)$. $(B/A)_e(z)$ can be obtained simply by applying a filter as indicated above. $G(\omega)$ in equation (15) or (16) can be obtained from $P(t)$ in equation (12).

The space distribution of non-linear parameter $B/A(z)$ obtained by above means can be indicated as an image, namely an image of space distribution of $B/A(z)$. Fig. 3 is a block diagram of an apparatus which can realize this.

In Fig. 3, 1 is a timing controller which controls the emission of the pumping wave $W_P$, 2 is an oscillator for providing the probing wave $W_m$, 3 is a driver to drive a transducer $X_A$, 4 is a transducer $X_A$ which transmits the probing wave $W_m$, 5 is an acoustic medium to be measured (the measured medium), 6 is a transducer $X_B$ which receives the probing wave $W_m$ as modulated by $W_P$ in the measured medium, 7 is a receiving amplifier, 8 is a phase detector, 9 is a filter whose characteristics are defined by $(1/K)(1/G(\omega))$ in equation (15), 10 is a driver for the pumping wave $W_P$, and 11 is a transducer $X_P$ which radiates the pumping wave $W_P$. Distance from $X_P$ to the probing beam is indicated by $x_1$, and $z_2$ is a range of actual measurement in the medium 5.

Fig. 4 shows waveforms of signals developed in the circuit of Fig. 3. The reference symbols used for the waveforms of Fig. 4 are present in Fig. 3 to identify the points at which the waveforms are developed.

DV is a driving pulse for the pumping transducer $X_P$, $V_R$ is an output signal of receiving amplifier 7, $\phi(t)$ is an output signal of phase detector 8, and $(B/A)_e(t)$ is an output signal of filter 9.

In Fig. 4, $t_1$ is a sum of two time intervals $(x_1/C_0)$ and $(z_1/C_0)$. The former interval is a time interval between the moment at which the pumping wave $W_P$ is emitted and a moment at which $W_P$ arrives at the probing wave $W_m$. The latter interval is a time interval between a moment at which $W_m$ is modulated by $W_P$ and a moment at which the front edge of the modulated part of $W_m$ is received by the transducer $X_B$.

The probing wave $W_m$ begins to be phase modulated after passage of the time interval $t_1$ from the moment of transmission of $W_P$.

A phase modulated output $V_R$ is provided over a time period of $t_2$ which is a time interval over which the modulated probing wave $W_m$ passes through the length $z_2$ of the measured medium. $t_2=z_2/C_0$.

Phase detector 8 detects phase shifts in received signal $V_R$ by comparing it with the phase of an output signal of oscillator 2 which is a reference signal for this purpose, and provides an output $\phi(t)$ as a function of time. However, $\phi(t)$ can be considered as a function of position z, as mentioned above with respect to equation (8), since there is a linear relationship between t and z. This output signal is filtered by filter 9, and the equivalent non-linear parameter $(B/A)_e$ can be obtained as a function of time, $(B/A)_e(t)$, that is, as a function of z, $(B/A)_e(z)$.

As disclosed above, in a measuring method embodying the present invention, which uses a pulsed pumping wave, space distribution of the equivalent non-linear parameter $(B/A)_e(z)$ can be measured with a relatively simple apparatus and can be measured speedily without providing various CW pumping waves and complex Fourier transformations.

The following may be helpful for understanding of the above and the following description.

A pulse of the pumping wave will pass through the Z axis in an instant (in one moment of time) when it propagates in a direction orthogonal to the Z axis. At this instant, a probing wave (that is a continuous wave) is propagating in a queue (beam) along the Z axis. In an instant at which the pumping wave passes over the probing wave (passes through the Z axis), each portion of the probing wave (along the Z axis) will be affected by the pumping wave, and each portion of the probing wave will be phase shifted corresponding to $(B/A)_e$ at the respective point which it occupies along the Z axis at that instant.

Thus it can be said that the wave train of the probing wave has the value of $(B/A)_e$ at each point along the Z axis stamped on it (on its phase) by the pumping pulse. Therefore, the pumping pulse may be called a stamping pulse. After the probing wave train is thus stamped, that wave train travels to the receiving transducer and successive parts of the train are received in temporal succession. Thus, the time sequence of phase changes of the received probing wave gives information of the distribution of $(B/A)_e$ along the Z axis.

The output signal $\phi(t)$ of phase detector 8 is shown along a time axis in Fig. 4, but it can be considered that the phase shift at each moment of time corresponds to the phase shift of the probing wave affected by the pumping wave (pulse) at a respective point of the Z axis.

Therefore, if $V_R$ in Fig. 4 is obtained, it contains information giving the distribution of $(B/A)_e$ on the Z axis. The phase of $V_R$ must have some relation to $(B/A)_e$. The filter which extracts $(B/A)_e$ from the received probing wave train is designated by reference numeral 9 in Figure 3. If the data successively output from filter 9 is plotted along the Z direction, it shows the profile of $(B/A)_e$ along the Z axis.

In the above explanation, the pumping wave is assumed to be a plane wave. However, a plane wave is hard to realize in a practical apparatus because to achieve a perfect plane wave the aperture of a pumping wave transducer would have to be a plane spreading out infinitely. Therefore, in actual apparatus embodying the present invention, a part of a spherical wave having a large radius of curvature is used as a pumping wave, assuming it to be nearly plane. This is a practical step from a consideration of the power needed for the generation of a pumping wave. However, in this case, the energy of the pumping wave tends to decrease towards the edges of the pumping wave. Therefore, the effects of the curvature of a spherical wave must be compensated for.

With a spherical pumping wave, the sound pressure of the pumping wave (on the Z axis) is not only a function of t but also of position z. Therefore, the deviation of the actual pumping wave from an ideal plane wave must be compensated for, and this compensation can be affected as follows.

Fig. 5 illustrates schematically the situation when a spherical pumping wave is used. In Fig. 5

(A) shows distribution of sound pressure of the pumping wave at a time $t=0$, when the wave front of the spherical pumping wave has just arrived at the Z axis (the position of the probing beam). Two broken lines indicate the front and rear edges of a pumping wave pulse respectively, propagating in the X direction.

(B) is a graph showing sound pressure distribution of an ideal plane pumping wave pulse, by which a probing wave should be affected as it propagates along the Z axis. The probing wave propagates from $z=z_0$ (at $t=0$) to $z=z$ (at $t=t$), during the time taken by the pumping wave to pass over the Z axis, during which it affects the probing wave. As seen in (B), time t or the time axis can be replaced by z or the Z axis.

(C) is a graph showing sound pressure distribution of a spherical pumping wave along the Z axis, by which the probing wave will be affected as it propagates along the Z axis. As seen in (A), the probing wave was at $z=z_r$ at the instant $t=0$, when the front edge of pumping wave arrived at the Z axis. Deformation of the sound pressure curve occurs, compared with that of (B), which can be understood as follows.

For a plane pumping wave, sound pressure is uniform along the Z axis, it varies only with time. So, if sound pressure P of a pumping wave pulse varies with a triangular shape as shown in (A), the sound pressure which will affect the probing wave is as shown in (B).

For a spherical pumping wave, on the other hand, the pumping wave diverges as it propagates, and it decreases in sound energy (pressure). Thus, sound pressure is highest at the center of the wave front (at $z=z_r$ in (A)). As the probing wave propagates beyond $z_r$, the sound pressure of pumping wave decreases, and it decreases more towards the edges of the wavefront of the pumping wave. This tendency is enhanced by sound loss in the measured medium, because a portion of a pumping wave apart from the center of the pumping wave front must propagate over a longer distance to reach the Z axis, as compared with a portion at the center of the wave front.

(D) is a graph showing sound pressure distribution of another spherical pumping wave, which a probing wave will encounter on the Z axis. In this case the probing wave was at $z=0$, when the front edge of the pumping wave front arrived at the Z axis ($t=0$). It will be understood that in this case sound pressure varies as shown in (D), differently from (C).

Therefore, a weighting function which is equivalent to g(z) in equation (12), and a filter corresponding to $1/G(\omega)$ in equation (15) must provide different values along z (to effect compensation for the curved wavefront of a spherical wave). So, the characteristic of a filter used must be varied for each point on the Z axis to obtain $(B/A)_e(z)$. However, sound pressure which affects a probing wave, at each point on the Z axis, as shown in Fig. 5, can be measured previously. Therefore, the filter characteristics for each value of $z_n$ can be calculated beforehand.

Therefore, it is possible to prepare a number of filters, each of which is applicable to a specified (Z axis) portion of a specimen to be measured. The number of filters needed depends on the resolution and accuracy of measurement required. Usually only few filters are needed, because the resolution is also defined by many other factors.

In the actual apparatus the distribution of $(B/A)_e(z)$ can be obtained as for a plane pumping wave by applying various filters to the output of phase detector 8 in Fig. 3. The outputs of these filters are switched one by one in correspondence to the Z axis portions of a specimen to be measured. It is also possible to design a filter having variable characteristics.

For a filter which sequentially varies its characteristics, digital filtering techniques can be applied to the output of the phase detector using means for A/D (analog-digital) conversion.

Another method of reducing the effect of a spherical pumping wave is to separate the transducer for pumping wave generation as far as possible from the medium to be measured. By this step the spherical wave is caused to approximate more nearly to a plane wave. However, this needs a high power of pumping wave. There is a practical balance between resolution and required power.

Next, a method for increasing the S/N ratio of measurements will be described.

When the phase deviation of the probing wave on account of the equivalent non-linear parameter or sound pressure of pumping wave is small, noise produced by detection circuitry can be large in comparison, detection of the phase deviation $\phi(z)$ can become impossible, but $(B/A)_e(z)$ obtained from $\phi(z)$ will in any event include much noise.

In Fig. 6, waveform (A) shows an output of phase detector (designated 8 in Fig. 3) without noise, (B) indicates schematically the form of noise, and (C) shows a practical output $\phi(z)$ of the phase detector.

In order to extract waveform (A) from (C), the following means are provided; an adding circuit which adds successive outputs of the phase detector such as $S_1$ to $S_k$, K times, matching positions along the probing beam. As a result, the signal amplitude is increased as much as K times, but the noise amplitude is increased as much as only $\sqrt{k}$ times, because noise is irregular and is added as a power summation. Consequently, the S/N ratio of the phase detector output can be improved $\sqrt{K}$ times as shown in waveform (D). This adding circuit is called a synchronized adding circuit.

Fig. 7 is a block diagram of an apparatus embodying the present invention comprising such adding means. In Fig. 7, 12 is the adding circuit which adds successive signals from the phase detector output, and 13 is a delay circuit which delays the output signals of the adding circuit 12. Delay circuit 13 delays the output signal of 12 by a period T, the repetition time of the pumping pulses. These circuits are well known in the art, and they operate on the basis of digital signals, the output signals of the phase detector being converted to digital signals using an A/D converter.

Applying an embodiment of the present invention, it is possible to realize an apparatus for displaying the distribution of parameter $(B/A)_e$ in two-dimensions or three-dimensions.

As mentioned above, distribution of the parameter can be measured along the probing beam, and this is analogous to a line scanning measurement. Thus, if the probing beam transmitting and receiving transducer pair are kept in fixed relative positions, and the pair are together moved in an X or Y direction, the pair effects a plane scanning, and a two-dimensional display can be obtained. Further, if the pair moves in X and Y directions, a three-dimensional scanning is effected, and a three dimensional display can be provided.

Fig. 8 shows a block diagram of such apparatus. In Fig. 8, 14 is a mechanical driving unit which shifts the pair of transducers 4 and 6 using for example a stepping motor driven by a control pulse from timing controller 1. Position detector 15 detects the position of the transducer pair, using a position finder such as a rotary encoder joined to a shaft of the stepping motor. Memory controller 16 generates a memory address corresponding to the output of position detector 15, receiving control signals such as a synchronous signal and a pumping wave clock signal from timing controller 1. Memory 17 stores the measured data of the parameter $(B/A)_e(z)$ after converting an analog signal from filter 9 to a digital signal.

The memory contents are processed by control and address signals for write/read from memory controller 16. Display 18 reads the data from memory 17 and displays the distribution of the parameter $(B/A)_e$.

Above disclosed are method and apparatus for measuring an equivalent non-linear acoustic parameter in accordance with one method form of the invention. Many applications and modifications may occur for the one skilled in the art. For example, the scanning method can be modified to electronic scanning. In this case, there is no need to use a moving mechanism. An afterglow (persistence of image) characteristic of a display tube can be applied without using memory 17 for the two-dimensional display of $(B/A)_e(z)$. They are all in the scope of the present invention.

Now, the second method form of the present invention for measuring the acoustic non-linear parameter will be described. This method form is a modification of the first method form but it has significant merits in practical application. In this method form the pumping wave is applied on the same axis as the probing beam, in the opposite direction.

As explained above with respect to compensation for a spherical pumping wave, it can be considered that the pumping wave of Fig. 1 need not always be perpendicular to the probing beam. In the case shown in Fig. 9, the axis of the pumping wave is rotated counter clockwise by 90° degrees as compared with previous cases, and it travels in a direction opposite to that of the probing beam. In Fig. 9 the probing beam is shown by $W_m$, and transducers for the probing beam are shown as $X_A$ and $X_B$. The probing wave propagates from left to right whilst the pumping wave $W_P$ propagates from right to left in the probing beam. The transducer generating the pumping wave is not shown in Fig. 9.

Fig. 10 shows arrangement of transducers for use in the case of Fig. 9. The probing beam and the transducers for the probing wave are as seen in Fig. 1. A pair of transducers, transmitting transducer $X_A$ and receiving transducer $X_B$, are used, but the pumping transducer $X_P$ is placed around $X_B$ as shown in Fig. 10. Pumping wave $W_P$ is shown by a broken line in Fig. 10; it propagates along the probing wave beam, but in the opposite direction to the probing wave $W_P$.

Distribution of the conventionally defined non-linear parameter can be obtained using this second method form in a way quite similar to that described previously for the first method form. The wave train of the probing wave (a continuous wave) has values of the parameter stamped on its phase by a pulse of the pumping wave. The stamped information is detected by a phase detector, and information regarding the non-linear acoustic parameter extracted from it.

A block diagram of apparatus for this opposed-wave method is shown in Fig. 11(A). Similar reference numerals and symbols are used to indicate parts the same as or corresponding to parts in Fig. 3.

A pumping transducer 11 ($X_P$) is arranged around the receiving transducer $X_B$ for the probing wave. A shadowed zone in medium 5 is a zone in which the non-linear parameter can be measured and its length is indicated by $z_2$.

Fig. 11(B) is a diagram illustrating pumping wave and receiving transducer structure. $X_B$ is the probing transducer for receiving the probing wave $W_m$. $X_P$ is a pumping transducer which is shaped as a ring surrounding the receiving transducer $X_B$.

Fig. 11(C) is a sectional view of the transducer of Fig. 11(B).

In Fig. 11(A), receiving amplifier 7 provides a signal output $V_R$ corresponding to the modulated probing wave, phase detector 8 detects phase changes in $V_R$ and produces an output $\phi(t)$. This is a train of phase changes time sequentially received, being stamped with (B/A) for respective positions along the probing wave beam, where the probing wave encountered a pumping wave pulse. As mentioned before, $\phi(t)$ is related to the space distribution of (B/A). The output of filter 9 is proportional to the space distribution of the non-linear parameter (B/A).

In the block diagram of Fig. 11(A), it is simply assumed that a sound pressure waveform does not change during propagation through medium 5, so the characteristics of filter 9 are constant. Usually, in the opposed-wave method, the waveform of the pumping wave formed on the probing beam does not change so much as in the perpendicular-wave method. However, if the waveform of pumping wave changes greatly, it is necessary to compensate for the changes. This compensation can be effected using a number of filters designed on the basis of data concerning sound pressure along the Z-axis measured in advance without a specimen, in a similar manner as described with respect to the intersecting-wave method.

Further, if the pumping wave attenuates as it propagates through the acoustic medium, without accompanying distortion of its waveform, it is not necessary to change the filter characteristics with time. Such a case often occurs when measuring a large sample. In such case, compensation for the attenuation of pumping wave can be accomplished rather easily. It can be effected by merely varying the amplification of the phase detector output signal ($\phi(t)$) in synchronisation with pumping wave propagation through the acoustic medium.

This type of amplification control can be effected by the "Time Gain Control amplifier" (TGC) shown in Fig. 12. Such an amplifier is often used in ultrasonic echo imaging apparatus, and is well known in the art. In Fig. 12, the amplification factor of an operational amplifier $Q_2$ can be varied by a control signal applied through a field effect transistor (FET) $Q_1$, and hence by a control signal applied to the transistor. Closed loop gain of the TGC circuit can be expressed as

$$1+\frac{R_f}{R_{FET}}$$

where $R_{FET}$ is equivalent resistance of $Q_1$, and $R_f$ is resistance of feedback resistor $R_f$ in Fig. 12. Since $R_{FET}$ can be varied by the control signal, gain can be correspondingly varied by the control signal. If the control signal is varied with time, the gain is varied with time also.

A block diagram of an apparatus using the opposed-wave measuring method is shown in Fig. 13. In Fig. 13, the same or corresponding parts are designated by reference signs as used in Fig. 8.

Comparing Fig. 13 to Fig. 8, the difference will be seen that the pumping wave transducer 11 is arranged around the probing wave transducer $X_B$. Other parts and their operations are all similar to those of Fig. 8. Operation will be easily understood by the one skilled in the art so further explanation is omitted.

Fig. 14 shows some examples of the structures of transducers applicable for embodiments of the present invention using the opposed-wave method. In Fig. 14, (A) shows a transducer having annular structure in which a part transducer $X_1$ is used for receiving the probing wave, and $X_2$ to $X_4$ are used for the pumping wave. Focussing of the pumping beam is controlled easily by controlling the phase of driving pulses applied to each of $X_2$ to $X_4$. The annular structure can be modified as in (B). The aperture of each part transducer can be modified to take a semicircle form as shown in (C), or a rectangle form arranged as shown in (D). In (D), the part transducer $X_2$ is used for receiving the probing wave, and $X_1$ and $X_3$ are used for the pumping wave.

Electro-scanning can be applied. This is effected by using phased array or linear array technology, which is known in the art. Fig. 15, (A) and (B) show transducer arrangements in which array transducers are used both for receiving the probing wave and transmitting the pumping wave. In (A) and (B), $Y_2$ is used for the probing wave and $Y_1/Y_3$ for the pumping wave. In Fig. 15, (C) or (D), $Y_2$ is an array transducer for receiving the probing wave, whilst $Y_4$ or both $Y_4/Y_5$ are single plate transducers for the pumping wave. For scanning an array transducer, either so-called linear scan or so-called sector scan can be applied. These scan techniques are well known in the art so further explanation is omitted.

Other examples of array transducer techniques which can be applied to the present invention are shown in Fig. 16(A) and (B), where element $Z_1$ is for pumping wave transmission and element $Z_2$ is for probing wave reception. In (A), $Z_1$ and $Z_2$ elements are arranged alternately, but strict alternation is not always required so a freer arrangement ($Z_2$ in every third place) as shown in (B) can be employed.

Furthermore, a single transducer element can be used for both receiving the probing wave and transmitting the pumping wave. Such transducer should have a sound frequency characteristic which is sufficiently wide, as indicated in Fig. 17(A). The transducer is driven so as to radiate a pumping wave in a frequency band as shown in Fig. 17(B), whilst a receiving amplifier for the probing wave has a frequency characteristic as shown in Fig. 17(C). Using such a transducer, the beam of the pumping wave can be automatically collimated to the probing beam because the pumping transducer is placed completely at the same position as the probing transducer. Array transducer technology and electronic scanning also can be employed in combination with such transducer elements.

A different effect can be achieved by piling up or stacking two kinds of transducer, as shown in Fig. 18. Generally, different materials are used for each transducer, such as PZT (a trade name of Clevite Corp., Piezo electric device composed of $Pb(T_iO_3, Z_vO_3)$) and PVDF (an abbreviation of "polyvinylidene fluoride"). PZT is a hard material and its acoustic impedance is high compared with biomedical tissue, while PVDF is soft and its impedance is close to that of biomedical tissue. So, as shown in Fig. 18, the transducer has a piled or stacked layer type structure in which PVDF is used for a front layer $X_{11}$ as the receiving probing transducer, and PZT is used for a back layer $X_{21}$ as the pumping transducer. The front layer $X_{11}$ has a surface for contacting an object, so its PVDF acts as an impedance matching layer to an object such as biomedical tissue. The back layer $X_{21}$ PZT is also suitable for the front layer $X_{11}$ PVDF, because it requires high impedance as a backing for high radiation efficiency.

An array transducer technique can also be employed with such piled or stacked types of transducer.

Array technology as described above can be employed in a measuring apparatus using the intersecting-wave method.

As can be understood from the above description, the opposed-wave measuring method has merits as compared with the intersecting-wave method in that: apparatus can be more compact; temperature measurement can be performed more sensitively; and the pumping transducer can be made more easily. Therefore, it can be said that the opposed-wave method is easier to use in practice than the intersecting-wave method.

Next, as an example of the application of an embodiment of the present invention, a temperature measuring system for measuring internal temperature of an acoustic medium will be described.

The fundamental principles of such temperature measurement are as follows. The value of (B/A), or its distribution, will vary with temperature. So, if such a value or distribution is measured and stored beforehand for a reference sample (at known temperatures), it is possible then to determine an unknown temperature of a similar sample by comparison.

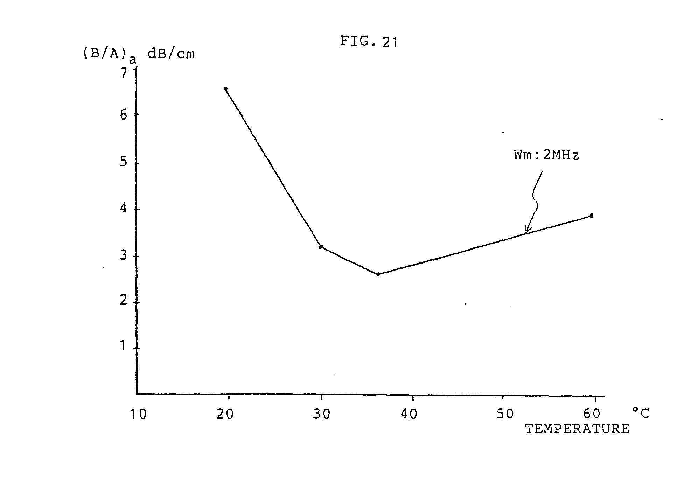

Fig. 21 is a graph showing a curve indicating relationship of (B/A) to temperature. This curve was obtained by measurements at known temperatures of a fresh meat sample, varying the temperature of the meat as required, with a probing wave frequency of 2 MHz. When such curves are known beforehand for various samples, it is possible to determine temperatures of any similar sample from the value of (B/A).

The non-linear parameter (B/A)(z) mentioned above has been derived assuming that sound speed $C_0$ and density $\rho_0$ are constant with respect to phase change, corresponding to the second term of equation (1).

However, if not only the parameter (B/A) but also $C_0$ and/or $\rho_0$ varies locally in the acoustic medium, the phase change should be expressed strictly by the following function, f:

$$f\{(B/A),\ C,\ \rho\}(z)=\frac{1}{\rho_0 C_0}\left(\frac{B}{A}\right)(z) \quad (20).$$

When temperature of the acoustic medium varies, values of $\rho_0$, $C_0$, and (B/A) also vary. Therefore, temperature variation can be obtained from measured data concerning the function f.

Usually, it can be assumed that density $\rho_0$ does not depend much on temperature, but $C_0$ and (B/A) do vary significantly with temperature. Therefore, if the temperature of an acoustic medium varies from $T_0$ to $T_1$, the following equations can be obtained:

$$\rho_0(z)_{T1}=\rho_0(z)_{T0}=\rho_0(z),$$

$$C_0(z)_{T1}=C_0(z)_{T0}+\alpha\Delta T,$$

$$(B/A)(z)_{T1}=(B/A)(z)_{T0}+\beta\Delta T,$$

where, $\Delta T=T_1-T_0$, $\alpha$ and $\beta$ are constants.

Thus, a difference of value of the function f before and after the acoustic medium has suffered a temperature change can be derived as follows (where, Δ indicates the difference)

$$\Delta f=\left\{\frac{1}{\rho_0 C_0}\left(\frac{B}{A}\right)\right\}(z)_{T1}-\left\{\frac{1}{\rho_0 C_0}\frac{B}{A}\right\}(z)_{T0}$$

$$\cong\left\{\frac{1}{\rho_0 C_0}\left(\frac{B}{A}\right)\right\}(z)_{T0}$$

$$\left\{\frac{\beta}{\left(\frac{B}{A}\right)(z)_{T0}}-\frac{\alpha}{C_0(z)_{T0}}\right\}\Delta T \qquad (21).$$

In equation (21), Δf can be measured in accordance with any embodiment of the present invention for measuring an apparent non-linear parameter of the acoustic medium, so if α, β, $C_0(z)_{t0}$, $\rho_0(z)$, and $(B/A)(z)_{t0}$ are given, ΔT can be derived from this equation. These parameters can be obtained by actual measurement, except $(B/A)(z)_{t0}$. The parameter $(B/A)(z)_{t0}$ also can be derived because the first term of the above equation (21) can be measured and $\rho_0(z)$ and $C_0(z)_{t0}$ are given.

Fig. 19 is a block diagram of apparatus for measuring internal temperature of an acoustic medium noninvasively. It is an example of the present invention, and the inventors believe that this is the first case in which it has been made possible to measure an internal temperature of an acoustic medium, such as a human body for example, without physically reaching the measuring point.

In Fig. 19, the same reference numerals or symbols designate the same or similar parts as in Fig. 8 or Fig. 13, and the functions of corresponding parts are similar. The pumping wave in the apparatus of Figure 19 intersects perpendicularly the probing beam as in Fig. 8. The opposed-wave method, for example using apparatus as shown in Fig. 13, is also applicable.

The block diagram of Fig. 19 therefore comprises the same units as were described with respect to Fig. 8, but the following functions and units are additionally provided for the temperature measuring apparatus. A memory unit 21 is provided to memorize values of the function f before the acoustic medium suffers a change of temperature. A subtractor 19 provides a difference value between the function f as memorized in memory unit 21 and the newly measured value of f after a temperature change. Then, Δf, the difference of values of function f before and after temperature change in the acoustic medium is obtained.

Fig. 20 illustrates a memory unit 21 in which 201 is an analog-digital converter, 203 is a digital analog converter, and 202 is an integrated circuit memory. The memory unit is controlled by a controller 22 in synchronism with pumping wave transmission.

In this manner, the value of Δf in equation (21) can be measured. Therefore, ΔT, the temperature difference can be derived by conversion circuit 20, containing the relation between Δf and Δt, obtained experimentally in advance. Such relation is usually nonlinear as shown in Fig. 21. The unit 20 can be realized with memory containing such a conversion table.

Fig. 21 shows an example of data measured by the above disclosed apparatus. A piece of fresh beef was used as the acoustic medium. Measurement was made as follows: a measuring point in the medium was selected optionally; there temperature was varied experimentally, and measured by a minute sensor, in the range from 10°C to 60°C; the phase change, namely f was measured as apparent non-linear parameter $(B/A)_a$ using constant $C_0$ and $\rho_0$ at room temperature; and frequency of the probing wave was set 2 $MH_z$.

In the graph of Fig. 21, the ordinate is the parameter $(B/A)_a$, and the abscissa is internal temperature at a designated point in the acoustic medium. The inventors believe this is the first time such data has been measured since this was impossible in the prior art. As mentioned before, such noninvasive measurement is possible without reaching the measurement point. When such data is accumulated for many kinds of media, including human body tissue, extensive application such as hyperthermia cancer therapy can be expected.

**Claims**

1. A method of measuring a non-linear parameter of an acoustic medium (5) comprising processes:

A) providing a probing beam of a probing wave ($W_m$) which is a continuous ultrasonic wave propagating through said acoustic medium (5);

B) providing an ultrasonic pumping wave ($W_P$) which propagates through said acoustic medium (5) so as to interact with said probing wave ($W_m$);

C) detecting phase changes of said probing wave ($W_m$) as affected by said pumping wave ($W_P$); and

D) extracting the non-linear parameter of said acoustic medium (5) from the detected phase changes of the probing wave ($W_m$), characterised in that the ultrasonic pumping wave ($W_P$) is pulsed.

2. A method according to claim 1, wherein said pumping wave ($W_P$) is radiated so as to intersect said probing beam ($W_m$), for example orthogonally of said probing beam ($W_m$).

3. A method according to claim 1, wherein said pumping wave ($W_P$) is radiated along said probing beam ($W_m$) in the opposite direction to said probing beam ($W_m$).

4. A method according to any preceding claim, wherein process D) comprises

measuring said phase changes of said probing

wave ($W_m$) as a function of position in said acoustic medium (5), and

deriving a space distribution of the non-linear parameter by filtering said measured phase changes with a filter having frequency characteristics approximately the inverse of the spectrum of said pumping wave ($W_P$).

5. A method according to claim 4, further comprising a process for compensating for deviation of measured values caused by a non-uniform space distribution of said pumping wave ($W_P$), said compensation being effected by:

measuring said space distribution of said pumping wave ($W_P$) in advance as a function of position along said probing beam ($W_m$) and time, and

varying filter characteristics in correspondence to the measured value space distribution.

6. Apparatus for measuring a non-linear parameter of an acoustic medium (5), comprising:

first means ($X_A$), providing a probing beam which is a continuous ultrasonic wave ($W_m$), propagating through said acoustic medium (5);

second means ($X_P$), providing an ultrasonic pumping wave ($W_P$) propagating through said acoustic medium (5) so as to interact with said probing wave ($W_m$);

third means (6, 7, 8), for detecting phase changes of said probing wave ($W_m$) as affected by said pumping wave ($W_P$); and

fourth means (9), for extracting a distribution of said non-linear parameter on the basis of detected phase changes of the probing wave ($W_m$), characterised in that the second means ($X_P$) provide a pulsed ultrasonic pumping wave ($W_P$).

7. Apparatus according to claim 6, wherein said first means comprise:

first ($X_A$) and second ($X_B$, 6) ultrasonic transducers located on opposite sides of said acoustic medium (5), the first transducer ($X_A$) being operable to radiate said probing wave ($W_m$) at a power level lower than that of said pumping wave ($W_P$), the second transducer ($X_B$, 6) being operable to receive said probing wave ($W_m$) after propagation through said acoustic medium (5).

8. Apparatus according to claim 6 or 7, wherein said second means comprise:

a third ultrasonic transducer ($X_P$), operable to radiate said pumping wave ($W_P$) as a pumping wave beam whose beam width is sufficiently wide as to cover a measuring region of said acoustic medium (5).

9. Apparatus according to claim 6, 7 or 8, wherein said third means comprise:

phase detecting means (8), for detecting said phase changes of said probing wave ($W_m$), and for producing an output signal representative of said phase changes in a time sequential train; and said fourth means comprise

filter means (9), having a frequency characteristic approximately the inverse of that of said pumping wave ($W_P$), arranged for the receiving output signal of the phase detecting means (8), and for providing a spatially de-convoluted signal representing space distribution of said non-linear parameter.

10. Apparatus according to claim 8, wherein said third transducer ($X_P$) is installed in a position such that it radiates said pumping wave ($W_P$) in a direction intersecting the probing beam ($W_m$).

11. Apparatus according to claim 8, wherein said third transducer ($X_P$) is installed in a position such that it radiates said pumping wave ($W_P$) along said probing beam ($W_m$) in a direction opposite to that of the probing beam ($W_m$).

12. Apparatus according to any one of claims 6 to 11, further comprising compensating means for compensating deviations of measured value caused by non-uniform space distribution of said pumping wave, said compensating means being a filter of a characteristic variable with time or a time-switchable filter bank offering various characteristics, corresponding to advance-measured values of spatial and temporel distribution of said pumping wave.

13. Apparatus according to any one of claims 6 to 12, further comprising means (12, 13) for improving S/N ratio, which comprises synchronous adding means (13) for summing a plurality of measured values of said phase changes for corresponding positions, in synchronism with pumping wave pulses ($W_P$).

14. Apparatus according to any one of claims 6 to 13, further comprising means (14, 15) for scanning said probing beam ($W_P$) to provide an image of a two or three dimensional distribution of said non-linear parameter.

15. Apparatus according to claims 7 and 8, wherein said third transducer ($X_P$) has an annular structure positioned around said second transducer ($X_B$, 6), or said second ($X_B$, 6) and third ($X_P$) transducers have semicircular faces, together making up a circle, or said second ($X_B$, 6) and third ($X_P$) transducers have rectangular shapes and said third transducer(s) ($X_P$) is arranged alongside said second transducer ($X_B$, 6).

16. Apparatus according to claims 7 and 8, wherein said second transducer ($X_B$, 6) and said third transducer ($X_P$) consist of a single transducer element having a wide frequency characteristic covering both the frequency band of a received probing wave ($W_m$) and the frequency band of a transmitted pumping wave ($W_P$).

17. Apparatus according to claims 7 and 8, wherein said second ($X_B$, 6) and third ($X_P$) transducers together make up a layer type transducer, of which a front layer is said second transducer, and a back layer is said third transducer.

18. Apparatus according to claim 14, when read as appended to claim 7, wherein said scanning is performed mechanically, by moving at least said first ($X_A$) and second ($X_B$, 6) transducers as a pair, relative to said acoustic medium (5).

19. Apparatus according to claim 14, wherein said scanning is performed electronically, applying phased array or linear array technology.

20. Apparatus according to any of claims 6 to 19, further comprising variable amplifying means (Fig. 12) the gain of which is varied with time corresponding to propagation of said pumping wave ($W_P$) in said acoustic medium (5).

21. Temperature measuring apparatus for measuring temperature or temperature distribution in an acoustic medium (5) without physical contact with the measuring point comprising:

apparatus as set forth in any one of claims 6 to 20;

a memory means (21) storing measured values of said non-linear parameter;

a means (19) deriving a difference of values of said parameter before and after a change of temperature of said acoustic medium; and

a means (20) for converting said difference to the temperature change.

22. Apparatus as set forth in claim 21, further comprising:

a means deriving and memorizing (14 to 20) a space distribution of said temperature change along a path of said probing wave ($W_m$) which has propagated through said acoustic medium (5).

23. Apparatus as set forth in claim 21 or 22, further comprising scanning and displaying means (14 to 18) for providing an image of said temperature distribution in said acoustic medium.

**Patentansprüche**

1. Verfahren zum Messen eines nichtlinearen Parameters eines akustischen Mediums (5) mit den folgenden Prozessen:

(A) Vorsehen eines Sondenstrahls einer Sondenwelle ($W_m$), welche eine kontinuierliche Ultraschallwelle ist, die sich durch das genannte akustische Medium (5) fortpflanzt;

(B) Vorsehen einer Ultraschall-Pumpwelle ($W_P$), welche sich durch das genannte akustische Medium (5) so fortpflanzt, daß sie mit der genannten Sondenwelle ($W_m$) zusammenwirkt;

(C) Detektieren von Phasenänderungen der genannten Sondenwelle ($W_m$), wie sie durch die genannte Pumpwelle ($W_P$) beeinflußt werden;

(D) Extrahieren des nichtlinearen Parameters des genannten akustischen Mediums (5) aus den detektierten Phasenänderungen der Sondenwelle ($W_m$), dadurch gekennzeichnet, daß die Ultraschall-Pumpwelle ($W_P$) gepulst wird.

2. Verfahren nach Anspruch 1, bei dem die genannte Pumpwelle ($W_P$) so ausgestrahlt wird, daß sie den genannten Sondenstrahl ($W_m$) schneidet, z.B. orthogonal zu dem genannten Sondenstrahl ($W_m$).

3. Verfahren nach Anspruch 1, bei dem die genannte Pumpwelle ($W_P$) längs der genannten Sondenwelle ($W_m$) in entgegengestzter Richtung zu der genannten Sondenwelle ($W_m$) ausgestrahlt wird.

4. Verfahren nach einem der vorhergehenden Ansprüche, bei welchem der Prozeß (D) umfaßt Messen der genannten Phasenänderungen der genannten Sondenwelle ($W_m$) als eine Funktion der Position in dem genannten akustischen Medium (5), und

Ableiten einer Raumverteilung des nichtlinearen Parameters durch Filtern der genannten Phasenänderungen mit einem Filter, welcher Frequenzcharakteristiken hat, die etwa invers zu dem Spektrum der genannten Pumpwelle ($W_P$) sind.

5. Verfahren nach Anspruch 4, ferner mit einem Prozeß zum Kompensieren der Abweichung der gemessenen Werte, welche durch eine ungleichförmige Raumvereilung der genannten Pumpwelle ($W_P$) verursacht wird, welche genannte Kompensation bewirkt wird durch:

Messen der genannten Raumverteilung der genannten Pumpwelle ($W_P$) im voraus als eine Funktion der Position längs der genannten Sondenwelle ($W_m$) und der Zeit, und

Variieren der Filtercharakteristiken in Übereinstimmung mit dem gemessen Wert der Raumverteilung.

6. Verfahren zum Messen eines nichtlinearen Parameters eines akustischen Mediums (5) mit:

Ersten Einrichtungen ($X_A$), welche einen Sondenstrahl liefern, der eine kontinuierliche Ultraschallwelle ($W_m$) ist, die sich durch das genannte akustische Medium (5) fortpflanzt;

zweiten Einrichtungen ($X_P$), die eine Ultraschall-Pumpwelle ($W_P$) liefern, die sich dürch das genannte akustische Medium so fortpflanzt, daß sie mit der genannten Sondenwelle ($W_m$) zusammenwirkt;

dritten Einrichtungen (6, 7, 8) zum Detektieren von Phasenänderungen der genannten Sondenwelle ($W_m$), wie sie durch die genannte Pumpwelle ($W_P$) beeinflußt werden; und

vierten Einrichtungen (9), zum Extrahieren einer Verteilung des genannten nichtlinearen Parameters auf der Basis der detektierten Phasenänderung der Sondenwelle ($W_m$), dadurch gekennzeichnet, daß die zweite Einrichtung ($X_P$) eine gepulste Ultraschall-Pumpwelle ($W_P$) liefert.

7. Vorrichtung nach Anspruch 6, bei der die genannte erste Einrichtung umfaßt:

Erste ($X_A$) und zweite ($X_B$, 6) Ultraschallwandler, die auf gegenüberliegenden Seiten des genannten akustischen Mediums (5) angeordnet sind, von denen der erste Wandler ($X_A$) betreibbar ist, um die genannte Sondenwelle ($W_m$) auf einem Energiepegel auszustrahlen, der niedriger als derjenige der genannten Pumpwelle ($W_P$) ist, und der zweite Wandler ($X_B$, 6) betreibbar ist, um die genannte Sondenwelle ($W_m$) nach Fortpflanzung durch das genannte akustische Medium (5) zu empfangen.

8. Vorrichtung nach Anspruch 6 oder 7, bei der die genannte zweite Einrichtung umfaßt:

einen dritten Ultraschallwandler ($X_P$), der betreibbar ist, um die genannte Pumpwelle ($W_P$) als einen Pumpwellenstrahl auszustrahlen, dessen Strahlbreite hinreichend breit ist, um einen Meßbereich des genannten akustischen Mediums (5) zu bedecken.

9. Vorrichtung nach Anspruch 6, 7 oder 8, bei der die genannte dritte Einrichtung umfaßt:

eine Phasendetektiereinrichtung (8), zum Detektieren der genannten Phasenänderungen der genannten Sondenwelle ($W_m$) und zum

Erzeugen eines Ausgangssignals, welches die genannten Phasenänderungen in einem zeitsequentiellen Zug anzeigt; und die genannte vierte Einrichtung umfaßt

eine Filtereinrichtung (9), welche eine Frequenzcharakteristik hat, die angenähert das Inverse von derjenigen der genannten Pumpwelle ($W_P$) ist, die zum Empfangen des Ausgangssignals der Phasendetektiereinrichtung (8) angeordnet ist, und um ein räumliches der-convolutiertes Signal zu liefern, welches die Raumverteilung des genannten nichtlinearen Parameters darstellt.

10. Vorrichtung nach Anspruch 8, bei der der genannte dritte Wandler ($X_P$) in einer solchen Position installiert ist, daß er die genannte Pumpwelle ($W_P$) in einer Richtung ausstrahlt, die den Sondenstrahl ($W_m$) schneidet.

11. Vorrichtung nach Anspruch 8, bei der der genannte dritte Wandler ($X_P$) in einer solchen Position installiert ist, daß er die genannte Pumpwelle ($W_P$) längs dem genannten Sondenstrahl ($W_m$) in einer Richtung entgegengesetzt zu dem Sondenstrahl ($W_m$) abstrahlt.

12. Vorrichtung nach einem der Ansprüche 6 bis 11, ferner mit einer Kompensationseinrichtung zum Kompensieren von Abweichungen des gemessenen Wertes, die durch ungleichförmige Raumverteilung der genannten Pumpwelle verursacht sind, wobei die genannte Kompensationseinrichtung ein Filter mit einer Charakteristik ist, die mit der Zeit variabel ist, oder eine zeitschaltbare Filterbank, die verschiedene Charakteristiken anbietet, welche im voraus gemessenen Werten der räumlichen und zeitlichen Verteilung der genannten Pumpwelle entsprechen.

13. Vorrichtung nach einem der Ansprüche 6 bis 12, ferner mit Einrichtungen (12, 13), zur Verbesserung des S/N-Verhältnisses, welche synchrone Addiereinrichtungen (13) zum Summieren einer Vielzahl von gemessenen Werten der genannten Phasenänderungen für entsprechende Positionen, synchron mit den Pumpwellenimpulsen ($W_P$), umfassen.

14. Vorrichtung nach einem der Ansprüche 6 bis 13, ferner mit Einrichtungen (14, 15) zum Scannen des genannten Sondenstrahls ($W_P$), um ein Bild einer zwei- oder dreidimensionalen Verteilung des genannten nichtlinearen Parameters zu liefern.

15. Verfahren nach den Ansprüchen 7 und 8, bei dem der genannte dritte Wandler ($X_P$) eine ringförmige Struktur hat, die um den genannten zweiten Wandler ($X_B$, 6) angeordnet ist, oder der genannte zweite ($X_B$, 6) und dritte ($X_P$) Wandler halbkreisförmige Stirnseiten haben, die zusammen einen Kreis bilden, oder der genannte zweite ($X_B$, 6) und dritte ($X_P$) Wandler rechteckige Formen haben und der(die) genannte(n) dritte(n) Wandler ($X_P$) längs dem genannten zweiten Wandler ($X_B$, 6) angeordnet ist.

16. Vorrichtung nach Anspruch 7 oder 8, bei welcher der genannte zweite Wandler ($X_B$, 6) und der genannte dritte Wandler ($X_P$) aus einem einzigen Wandlerelement bestehen, welches eine weite Frequenzcharakteristik hat, die sowohl das Frequenzband einer empfangenen Sondenwelle ($W_m$) als auch das Frequenzband einer übertragenen Pumpwelle ($W_P$) bedeckt.

17. Vorrichtung nach den Ansprüchen 7 und 8, bei der den genannte zweite ($X_B$, 6) und dritte ($X_P$) Wandler zusammen einen Wandler vom Schichttyp bilden, dessen Frontschicht der genannte zweite Wandler ist, und dessen rückwärtige Schicht der genannte dritte Wandler ist.

18. Vorrichtung nach Anspruch 14, in Verbindung mit Anspruch 7, bei der das genannte Scannen mechanisch durchgeführt wird, durch Bewegen von wenigstens den genannten ersten ($X_A$) und zweiten ($X_B$, 6) Wandlern als ein Paar, relativ zu dem genannten akustischen Medium (5).

19. Vorrichtung nach Anspruch 14, bei welcher das genannte Scannen elektronisch durgeführt wird, durch Anwenden einer Phasenarray- oder einer Lineararray-Technologie.

20. Vorrichtung nach einem der Ansprüche 6 bis 19, ferner mit einer variablen Verstärkereinrichtung (Figur 12), deren Verstärkung in Übereinstimmung mit der Zeit, die der Fortpflanzung der genannten Pumpwelle ($W_P$) in dem akustischen Medium (5) entspricht, verändert wird.

21. Temperaturmeßvorrichtung zum Messen der Temperatur oder der Temperaturverteilung in einem akustischen Medium (5) ohne physischen Kontakt mit dem Meßpunkt, mit:

einer Einrichtung nach einem der Ansprüche 6 bis 20;

einer Speichereinrichtung (21), welche die gemessenen Werte des genannten nichtlinearen Parameters speichert;

einer Einrichtung (19), welche eine Differenz des Wertes des genannten Parameters vor und nach der Temperaturänderung des genannten akustischen Mediums ableitet; und

einer Einrichtung (20) zum Konvertieren der genannten Differenz zu der Temperaturänderung.

22. Vorrichtung nach Anspruch 21, ferner mit:

einer Einrichtung, welche eine Raumverteilung der genannten Temperatur längs einem Weg der genannten Sondenwelle ($W_m$) ableitet und speichert (14 bis 20), welche sich durch das genannte akustische Medium (5) fortgepflanzt hat.

23. Vorrichtung nach Anspruch 21 oder 22, ferner mit Scann- und Anzeigeeinrichtungen (14 bis 18), um ein Bild der genannten Temperaturverteilung in dem genannten akustischen Medium zu liefern.

**Revendications**

1. Procédé de mesure d'un paramètre non linéaire d'un milieu acoustique (5), comprenant les opérations suivantes:

A) la formation d'un faisceau de sondage constitué d'une onde de sondage ($W_m$) qui est une

onde ultrasonore continue se propageant dans le milieu acoustique (5),

B) la formation d'une onde ultrasonore de pompage ($W_P$) qui se propage dans le milieu acoustique (5) afin qu'elle interagisse avec l'onde de sondage ($W_m$),

C) la détection des déphasages de l'onde de sondage ($W_m$) affectée par l'onde de pompage ($W_P$) et

D) l'extraction du paramètre non linéaire du milieu acoustique (5) d'après les déphasages détectés de l'onde de sondage ($W_m$), caractérisé en ce que l'onde ultrasonore de pompage ($W_P$) est pulsée.

2. Procédé selon la revendication 1, dans lequel l'onde de pompage ($W_P$) est émise afin qu'elle recoupe le faisceau de sondage ($W_m$), par exemple perpendiculairement au faisceau de sondage ($W_m$).

3. Procédé selon la revendication 1, dans lequel l'onde de pompage ($W_P$) est émise le long du faisceau de sondage ($W_m$) en sens opposé à celui du faisceau de sondage ($W_m$).

4. Procédé selon l'une quelconque des revendications précédentes, dans lequel l'opération D) comprend

la mesure des déphasages de l'onde de sondage ($W_m$) en fonction de la position dans le milieu acoustique (5), et

la dérivation d'une distribution spatiale du paramètre non linéaire par filtrage des déphasages mesurés à l'aide d'un filtre ayant une réponse en fréquences qui est approximativement l'inverse du spectre de l'onde de pompage ($W_P$).

5. Procédé selon la revendication 4, comprenant en outre une opération de compensation de l'écart des valeurs mesurées provoqué par la distribution spatiale non uniforme de l'onde de pompage ($W_P$), cette compensation étant réalisée par les opérations suivantes:

la mesure préalable de la distribution spatiale de l'onde de pompage ($W_P$) en fonction de la position le long du faisceau de sondage ($W_m$) et du temps, et

la variation de la réponse du filtre d'une manière qui correspond à la distribution spatiale des valeurs mesurées.

6. Appareil de mesure d'un paramètre non linéaire d'un milieu acoustique (5), comprenant

un premier dispositif ($X_A$) formant un faisceau de sondage qui est une onde ultrasonore continue ($W_m$) se propageant dans le milieu acoustique (5),

un second dispositif ($X_P$) formant une onde ultrasonore de pompage ($W_P$) se propageant dans le milieu acoustique (5) afin qu'elle interagisse avec l'onde de sondage ($W_m$),

un troisième dispositif (6, 7, 8) destiné à détecter les déphasages de l'onde de sondage ($W_m$) affectée par l'onde de pompage ($W_P$), et

un quatrième dispositif (9) destiné à extraire une distribution du paramètre non linéaire en fonction des déphasages détectés de l'onde de sondage ($W_m$), caractérisé en ce que le second dispositif ($X_P$) forme une onde ultrasonore pulsée de pompage ($W_P$).

7. Appareil selon la revendication 6, dans lequel le premier dispositif comprend un premier ($X_A$) et un second ($X_B$, 6) transducteur ultrasonore, placés de part et d'autre du milieu acoustique (5), le premier transducteur ($X_A$) étant destiné à émettre l'onde de sondage ($W_m$) avec un niveau de puissance inférieur à celui de l'onde de pompage ($W_P$), le second transducteur ($X_B$, 6) étant destiné à recevoir l'onde de sondage ($W_m$) après propagation dans le milieu acoustique (5).

8. Appareil selon la revendication 6 ou 7, dans lequel le second dispositif comporte un troisième transducteur ultrasonore ($X_P$) destiné à émettre l'onde de pompage ($W_P$) sous forme d'un faisceau dont la largeur est suffisamment grande pour qu'il recouvre une région de mesure du milieu acoustique (5).

9. Appareil selon la revendication 6, 7 ou 8, dans lequel le troisième dispositif comprend:

un dispositif (8) de détection de phase destiné à détecter les déphasages de l'onde de sondage ($W_m$) et à former un signal de sortie représentatif des déphasages sous forme d'un train séquentiel au cours du temps, et le quatrième dispositif comporte

un dispositif de filtrage (9) ayant une réponse en fréquences qui approximativement l'inverse de celle de l'onde de pompage ($W_P$), et destiné à recevoir le signal de sortie du dispositif (8) de détection de phase et à former un signal ayant subi une déconvolution spatiale et représentant la distribution spatiale du paramètre non linéaire.

10. Appareil selon la revendication 8, dans lequel le troisième transducteur ($X_P$) est mis dans une position telle qu'il émet l'onde de pompage ($W_P$) dans une direction qui recoupe le faisceau de sondage ($W_m$).

11. Appareil selon la revendication 8, dans lequel le troisième transducteur ($X_P$) est placé dans une position telle qu'il émet l'onde de pompage ($W_P$) le long du faisceau de sondage ($W_m$) en sens opposé à celui du faisceau de sondage ($W_m$).

12. Appareil selon l'une quelconque des revendications 6 à 11, comprenant en outre un dispositif de compensation des écarts de la valeur mesurée provoqués par une distribution spatiale non uniforme de l'onde de pompage, le dispositif de compensation étant un filtre ayant une caractéristique variable au cours du temps ou une série de filtres qui peuvent être commutés au cours du temps et qui ont diverses réponses, correspondant à des valeurs préalablement mesurées de la distribution spatiale et temporelle de l'onde de pompage.

13. Appareil selon l'une quelconque des revendications 6 à 12, comprenant en outre un dispositif (12, 13) destiné à améliorer le rapport signal-sur-bruit, comprenant un dispositif (13) d'addition synchrone destiné à sommer plusieurs valeurs mesurées des déphasages ayant des positions correspondantes, en synchronisme avec les impulsions ($W_P$) de l'onde de pompage.

14. Appareil selon l'une quelconque des revendications 6 à 13, comprenant en outre un dispositif (14, 15) de balayage du faisceau de sondage ($W_P$) afin qu'il donne une image d'une distribution bidimensionnelle ou tridimensionnelle du paramètre non l'inéaire.

15. Appareil selon les revendications 7 et 8, dans lequel le troisième transducteur ($X_P$) a une structure annulaire et est placé autour du second transducteur ($X_B$, 6), ou le second ($X_B$, 6) et le troisième ($X_P$) transducteur ont des faces semi-circulaires, formant ensemble un cercle, ou le second ($X_B$, 6) et le troisième ($X_P$) transducteur ont des formes rectangulaires et le troisième ou les troisièmes transducteurs ($X_P$) sont disposés le long du second transducteur ($X_B$, 6).

16. Appareil selon les revendications 7 et 8, dans lequel le second transducteur ($X_B$, 6) et le troisième transducteur ($X_P$) forment un seul élément transducteur ayant une réponse étendue en fréquences qui recouvre à la fois la bande des fréquences d'une onde reçue de sondage ($W_m$) et la bande des fréquences d'une onde émise de pompage ($W_P$).

17. Appareil selon les revendications 7 et 8, dans lequel le second ($X_B$, 6) et le troisième ($X_P$) transducteur forment ensemble un transducteur à couches dont la couche avant constitue le second transducteur et une couche arrière le troisième transducteur.

18. Appareil selon la revendication 14, lorsqu'elle dépend de la revendication 7, dans lequel le balayage est réalisé mécaniquement, par déplacement du premier ($X_A$) et du second ($X_B$, 6) transducteur au moins sous forme d'une paire par rapport au milieu acoustique (5).

19. Appareil selon la revendication 14, dans lequel le balayage est réalisé électroniquement, par utilisation de la technologie des arrangements en phase ou linéaires.

20. Appareil selon l'une quelconque des revendications 6 à 19, comprenant en outre un dispositif d'amplification variable (figure 12) dont le gain est modifié au cours du temps afin qu'il corresponde à la propagation de l'onde de pompage ($W_P$) dans le milieu acoustique (5).

21. Appareil de mesure d'une température ou d'une distribution de température dans un milieu acoustique (5) sans contact physique avec le point de mesure, comprenant:

un appareil selon l'une quelconque des revendications 6 à 20,

un dispositif à mémoire (21) conservant les valeurs mesurées du paramètre non linéaire,

un dispositif (19) dérivant une différence des valeurs du paramètre avant et après un changement de température du milieu acoustique, et

un dispositif (20) destiné à transformer la différence en changement de température.

22. Appareil selon la revendication 21, comprenant en outre un dispositif (14 à 20) destiné à dériver et mémoriser une distribution spatiale du changement de température le long d'un trajet de l'onde de sondage ($W_m$) qui s'est propagée dans le milieu acoustique (5).

23. Appareil selon la revendication 21 ou 22, comprenant en outre un dispositif (14 à 18) de balayage et d'affichage destiné à donner une image de la distribution de température dans le milieu acoustique.

FIG.1

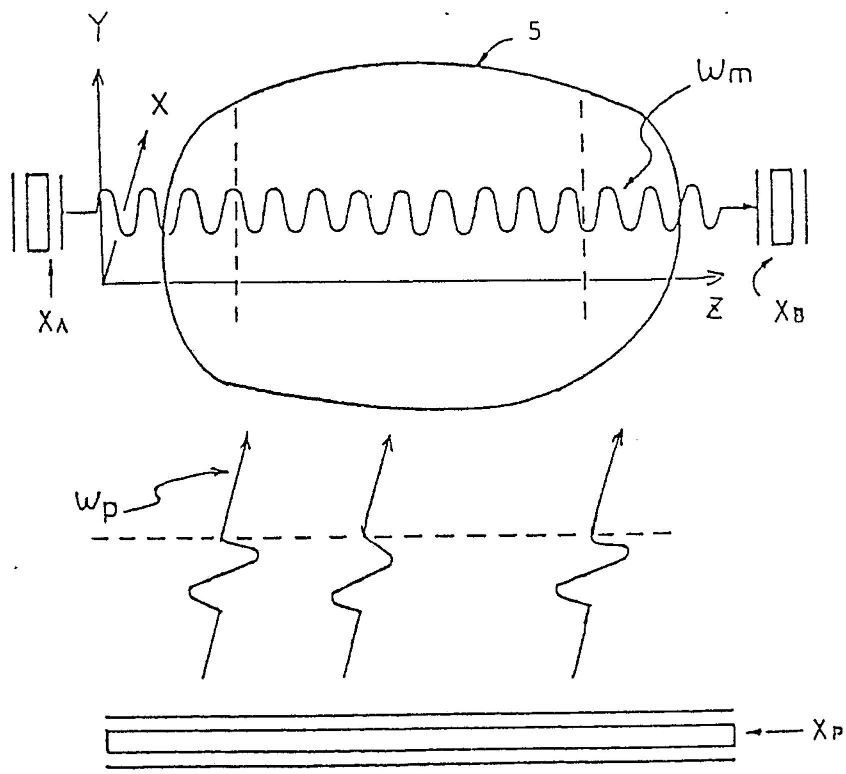

FIG. 2

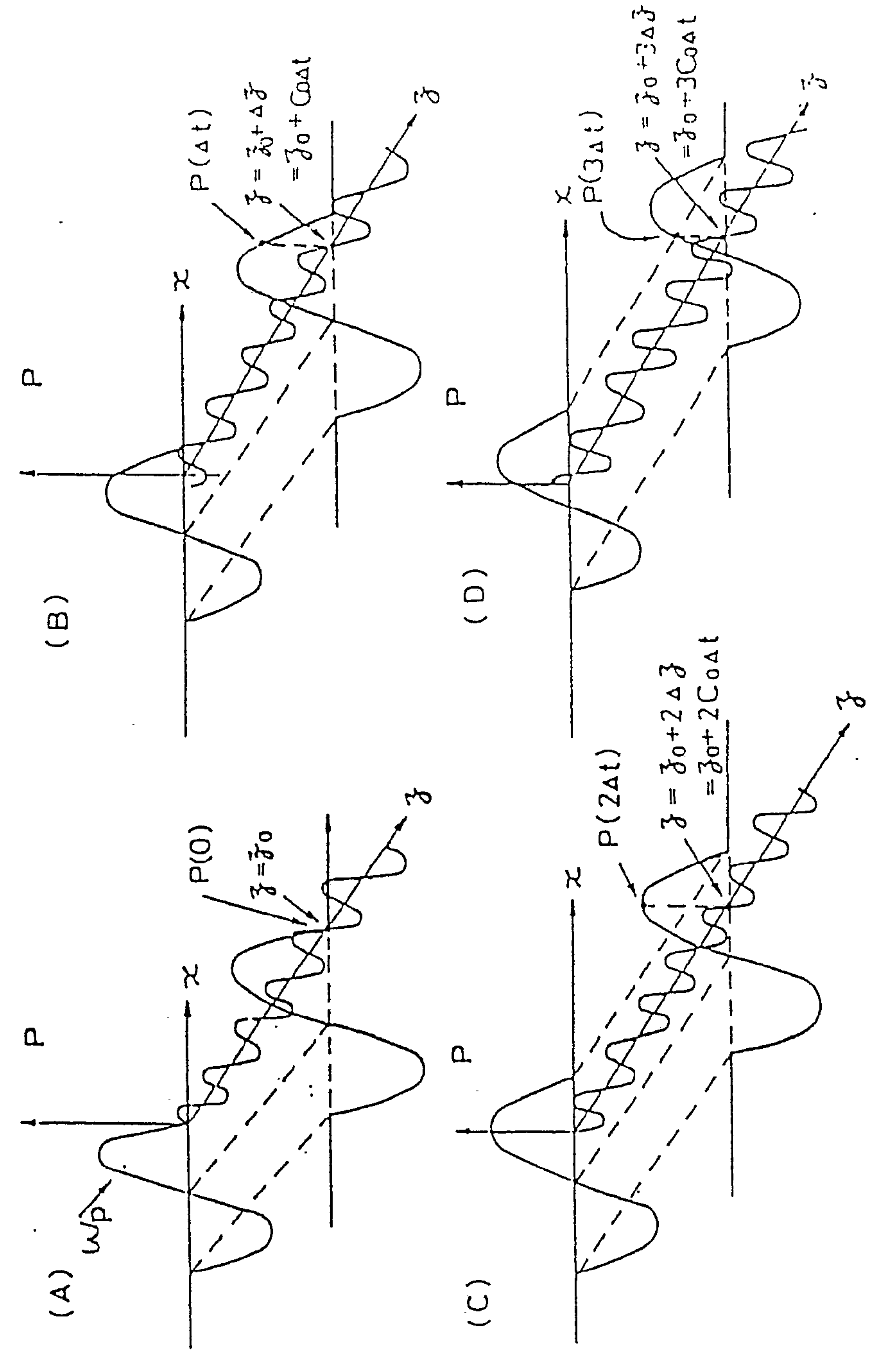
(A)
P
x
$\omega_p$
P(0)
$z = z_0$
(B)
P(Δt)
$z = z_0 + \Delta z$
$= z_0 + C_0\Delta t$
(C)
P(2Δt)
$z = z_0 + 2\Delta z$
$= z_0 + 2C_0\Delta t$
(D)
P(3Δt)
$z = z_0 + 3\Delta z$
$= z_0 + 3C_0\Delta t$

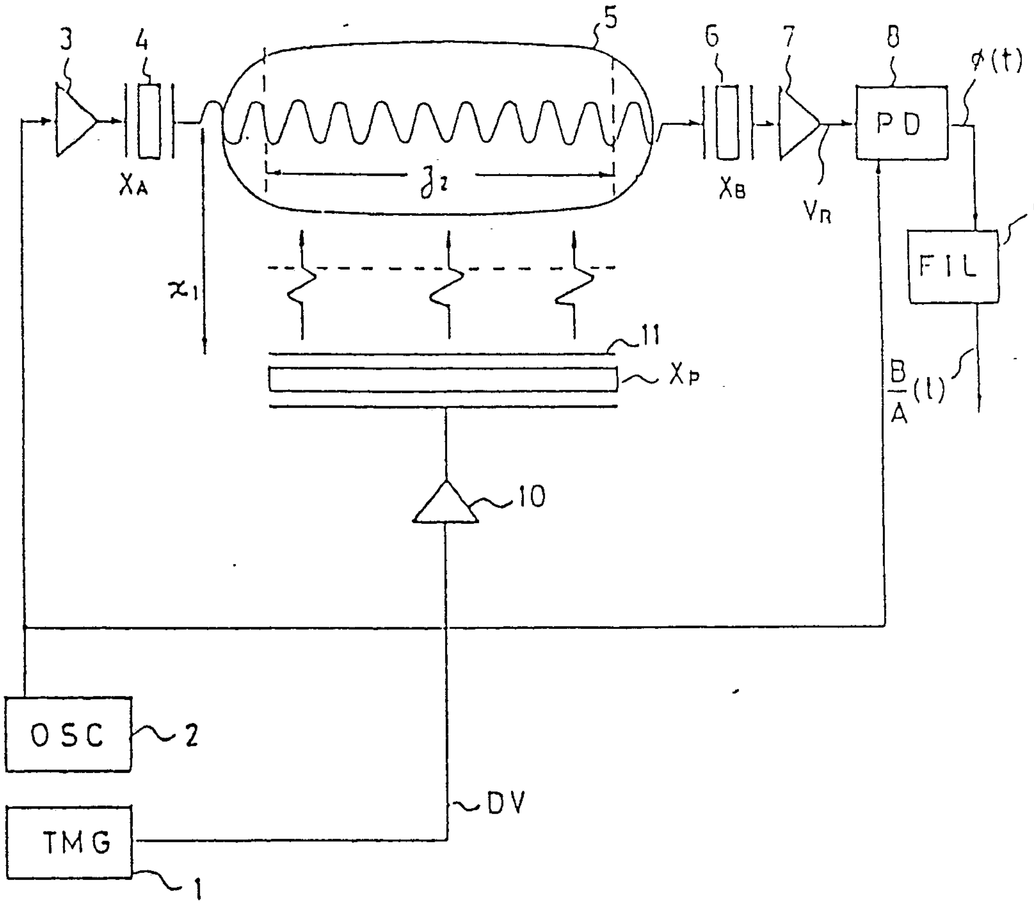
3
4
5
6
7
8
φ(t)
PD
$X_A$
$X_B$
$V_R$
$\ell_z$
$x_1$
9
FIL
11
$X_P$
$\frac{B}{A}(t)$
10
OSC
2
DV
TMG
1

FIG. 4

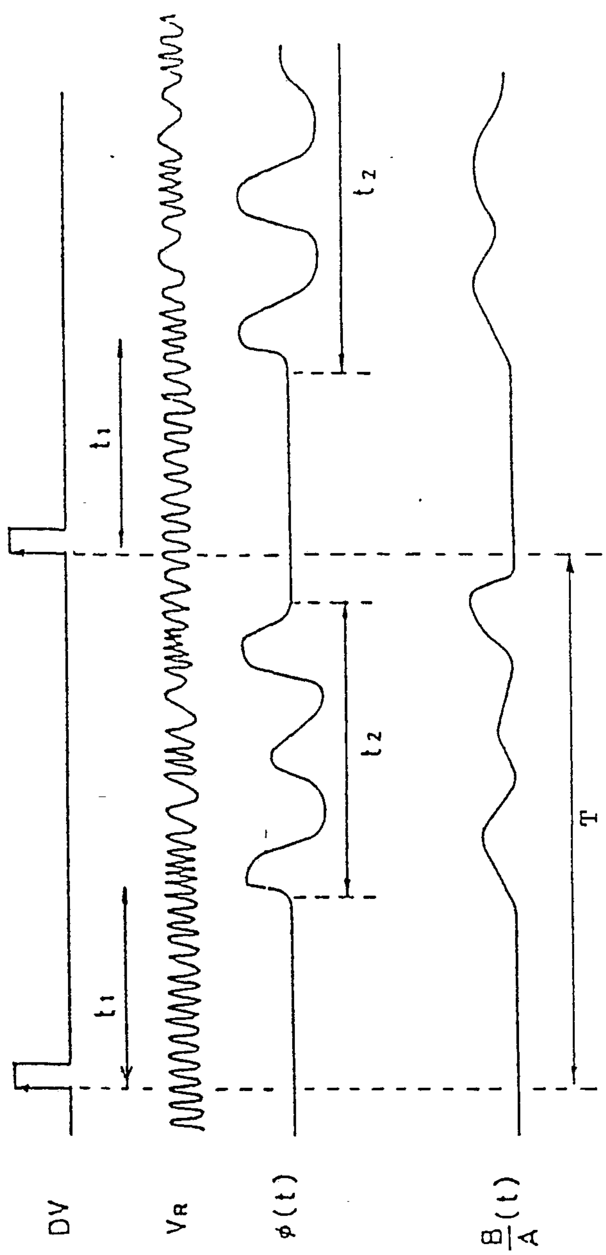

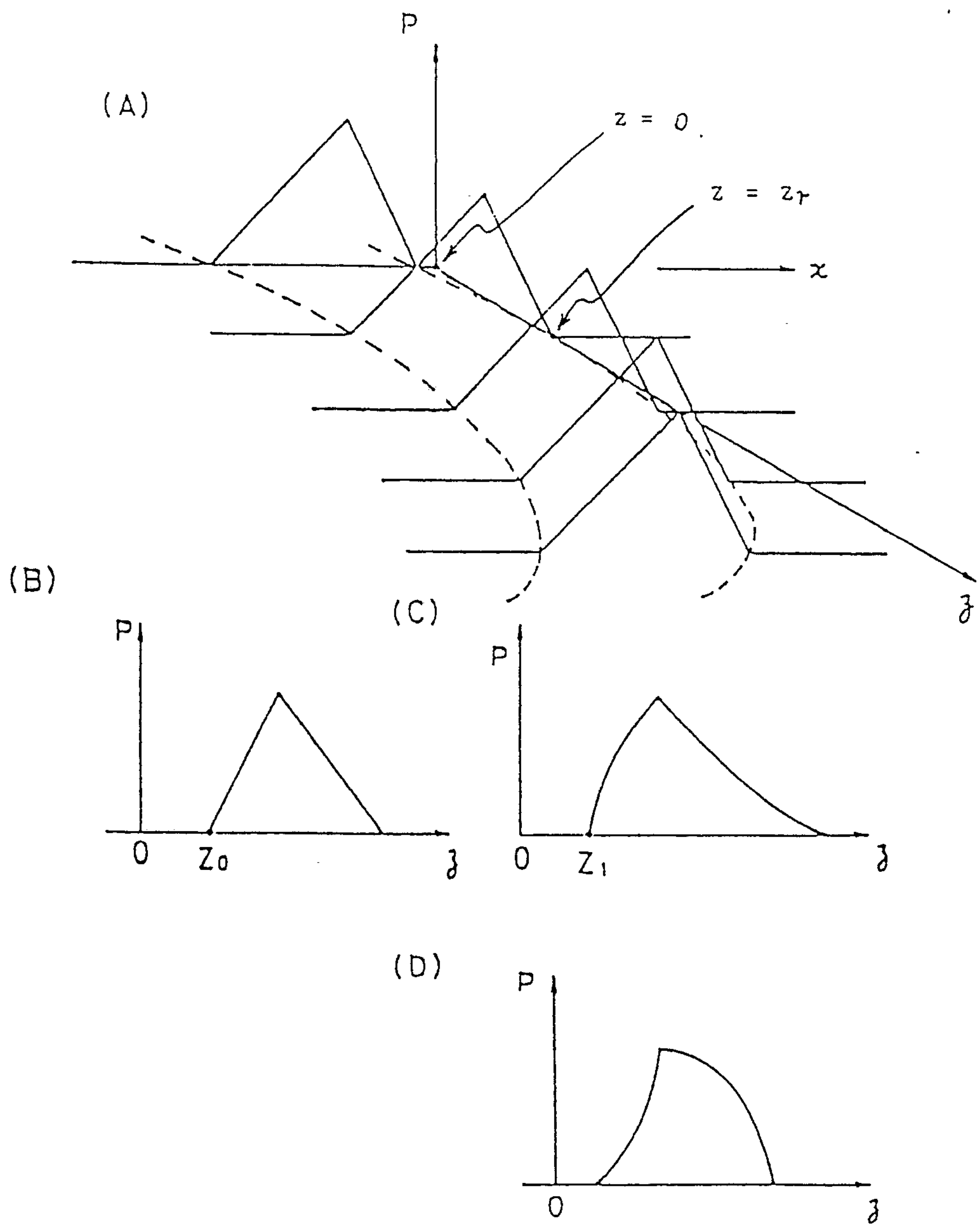
(A)
P
z = 0
z = zr
x
z
(B)
P
0
Z0
z
(C)
P
0
Z1
z
(D)
P
0
z

FIG. 6

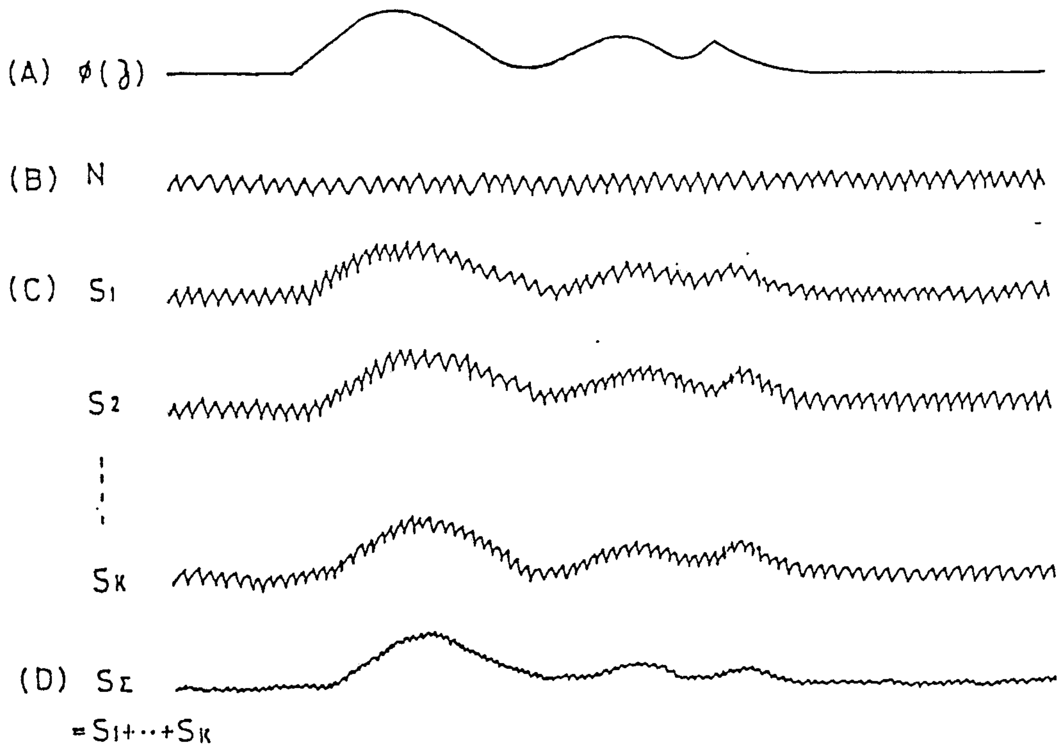

FIG. 7

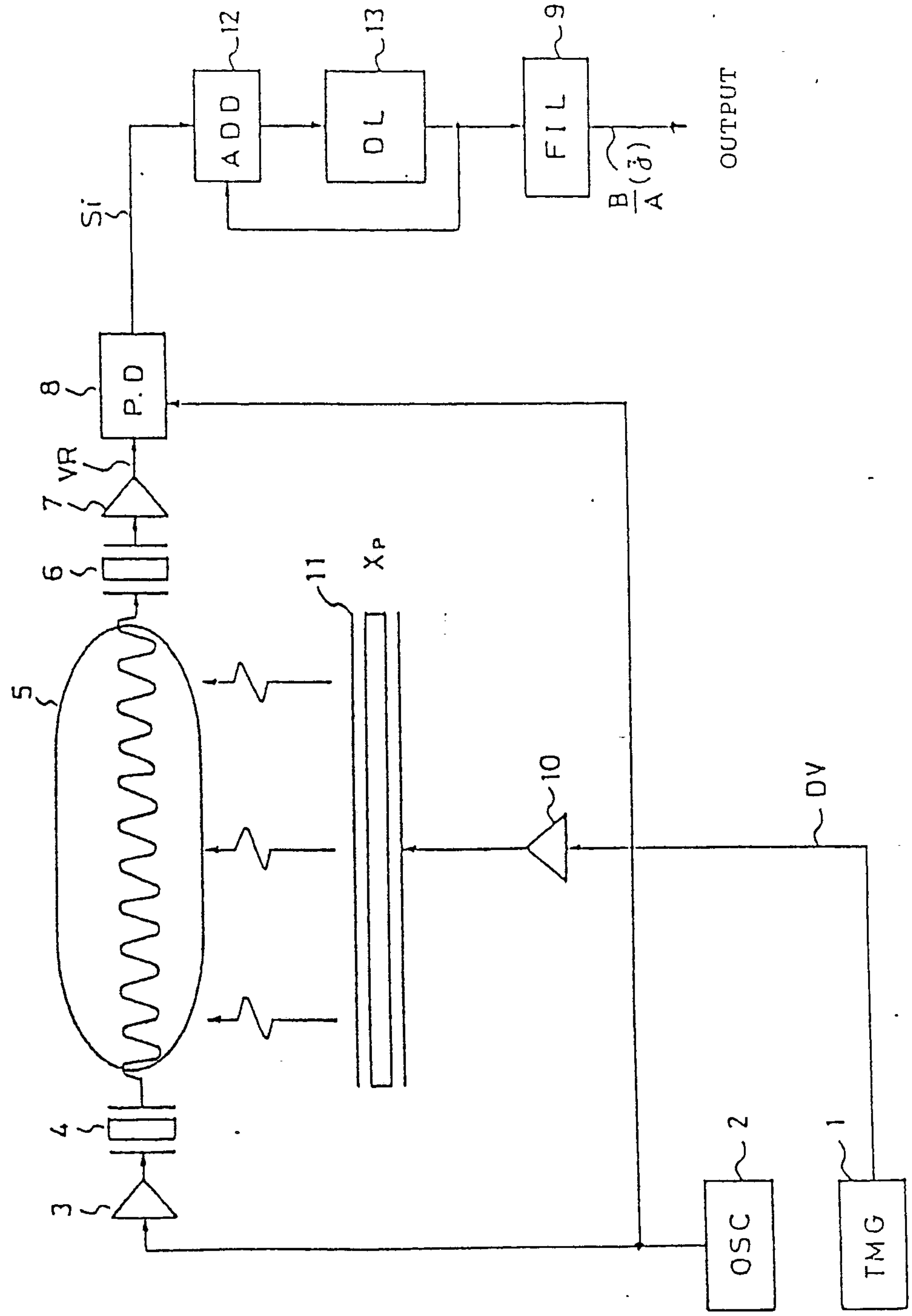
ADD
DL
FIL
OUTPUT
P.D
OSC
TMG
Si
VR
DV
$X_P$
$\frac{B}{A}(\vec{a})$
1
2
3
4
5
6
7
8
9
10
11
12
13

FIG. 8

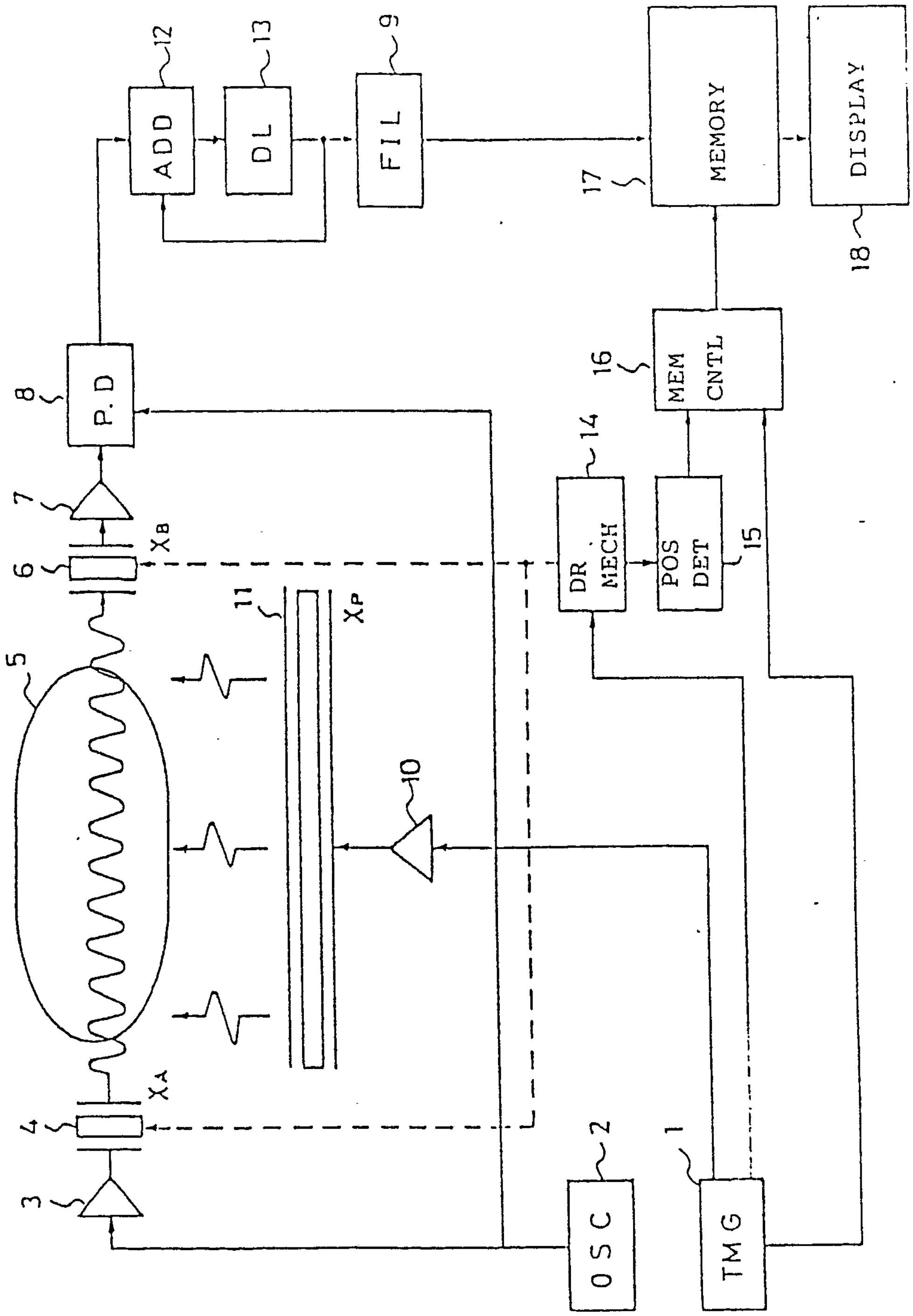
ADD
DL
FIL
MEMORY
DISPLAY
P. D
MEM CNTL
DR MECH
POS DET
OSC
TMG
XA
XB
XP

FIG. 9

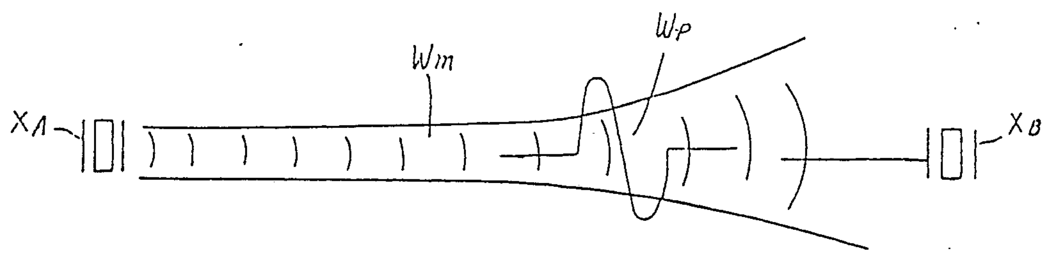


FIG. 10

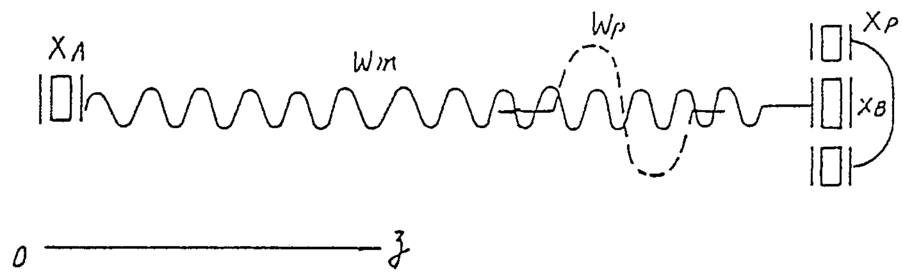

FIG. 11

(A)

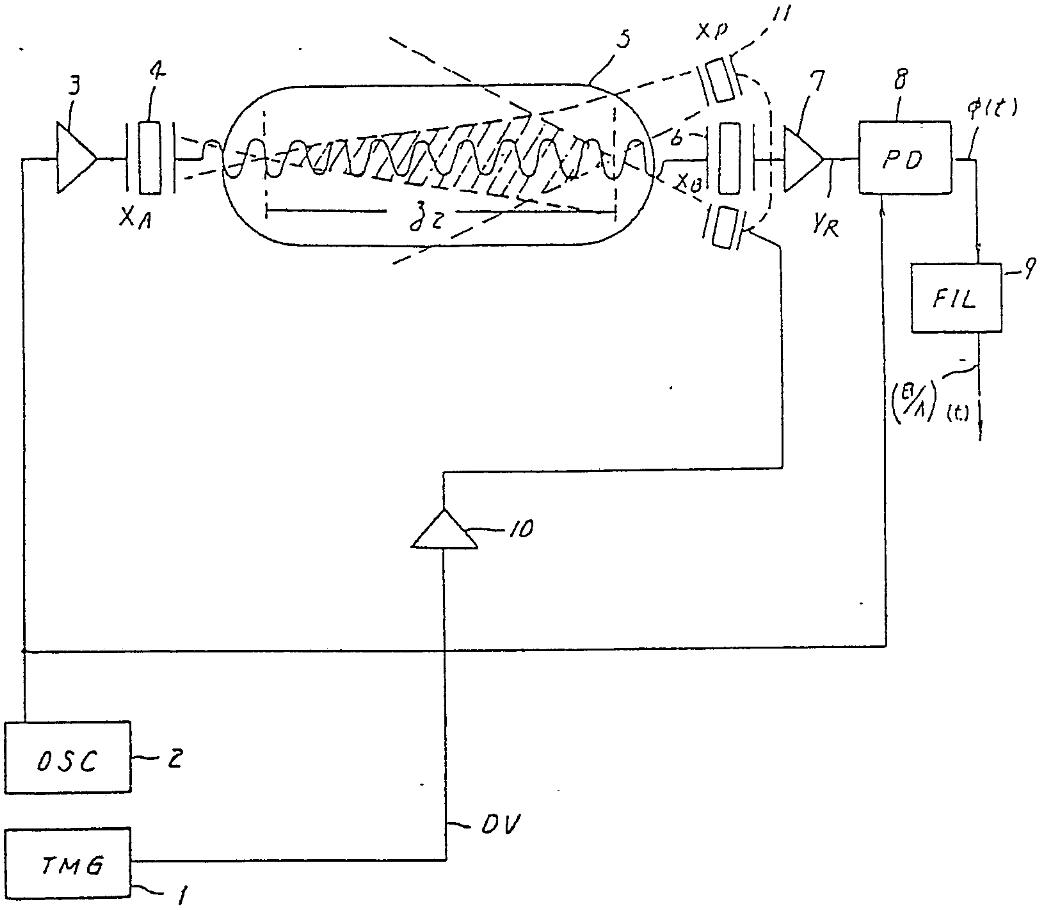


(B)

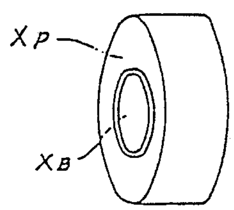


(C)

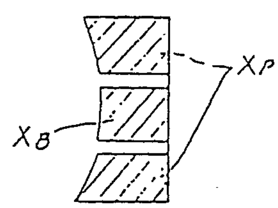

FIG. 12

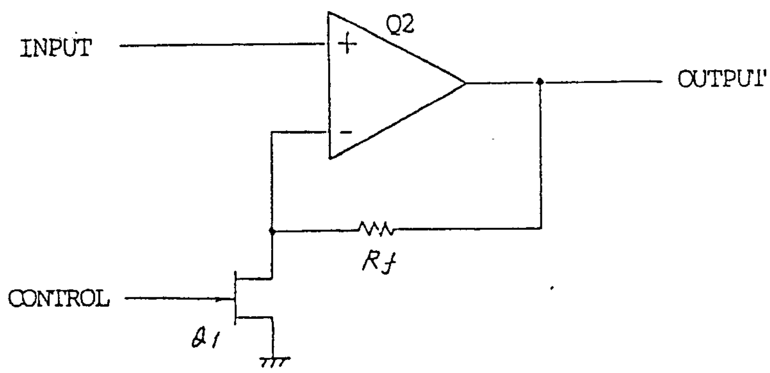

FIG.13

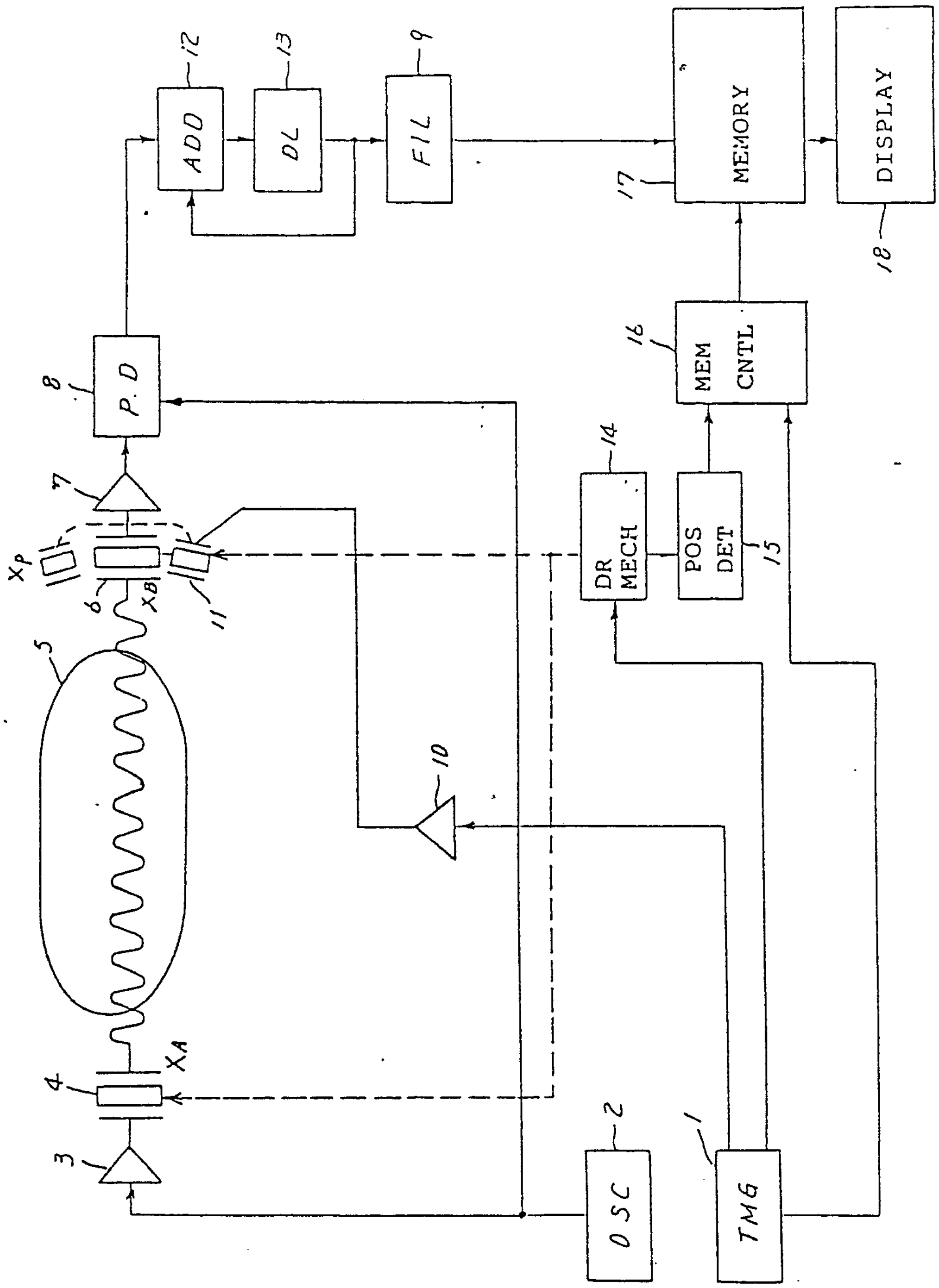
ADD
DL
FIL
MEMORY
DISPLAY
P.D
MEM
CNTL
DR
MECH
POS
DET
OSC
TMG
$X_P$
$X_B$
$X_A$
1
2
3
4
5
6
7
8
9
10
11
12
13
14
15
16
17
18

FIG. 14

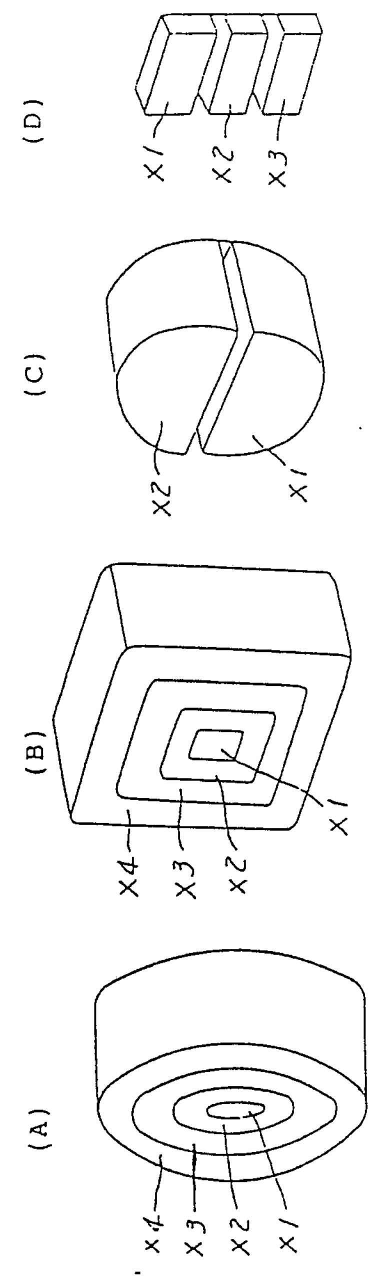

FIG. 15

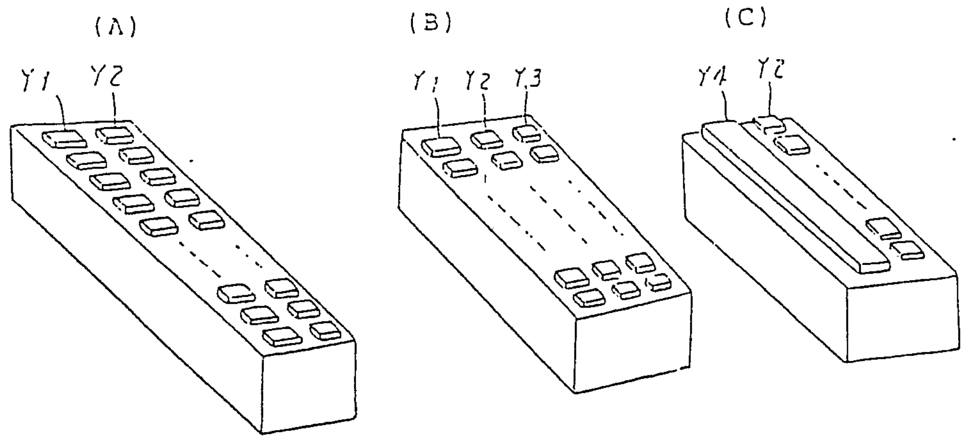


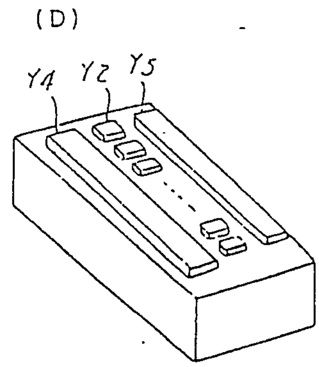


FIG. 16

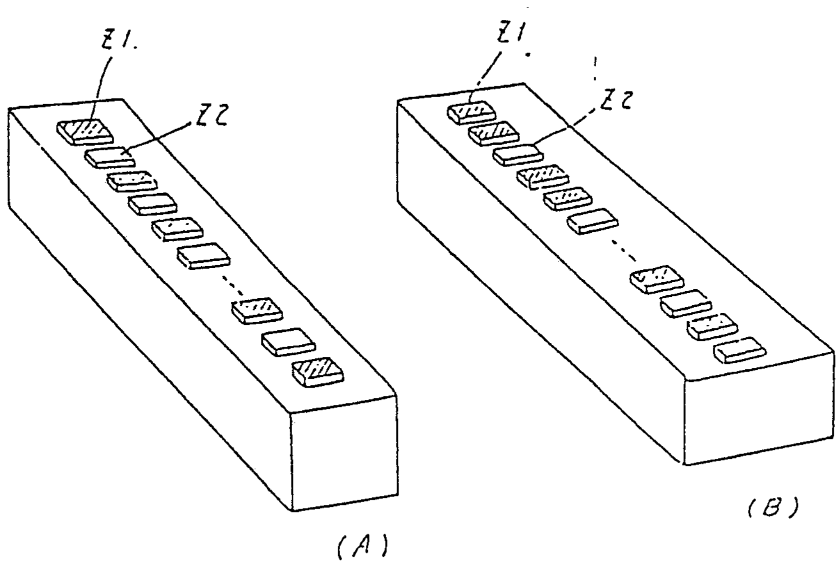

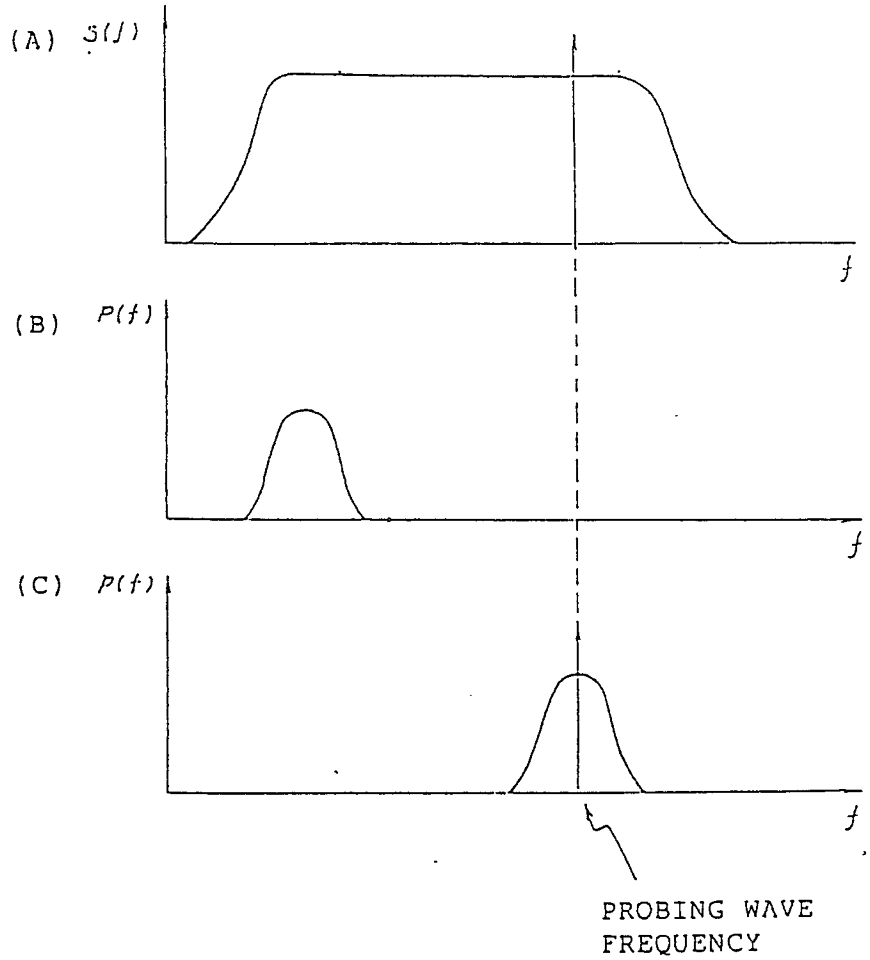


FIG. 18

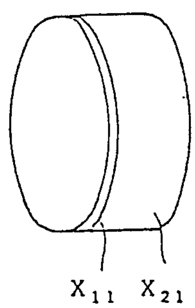

FIG. 19

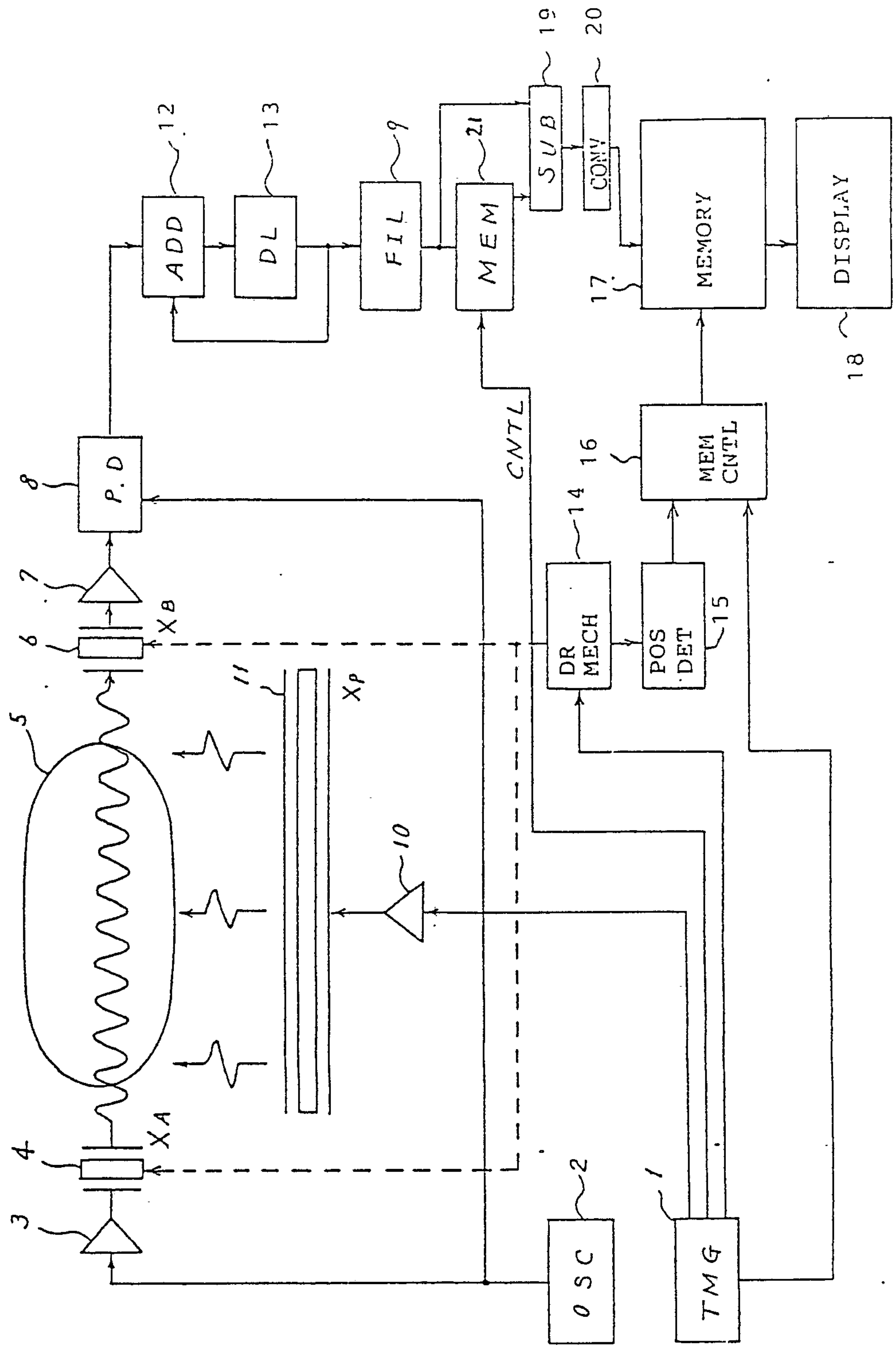
ADD
DL
FIL
MEM
SUB
CONV
MEMORY
DISPLAY
P. D
CNTL
MEM CNTL
DR MECH
POS DET
OSC
TMG
$X_A$
$X_B$
$X_P$
1
2
3
4
5
6
7
8
9
10
11
12
13
14
15
16
17
18
19
20
21

FIG. 20

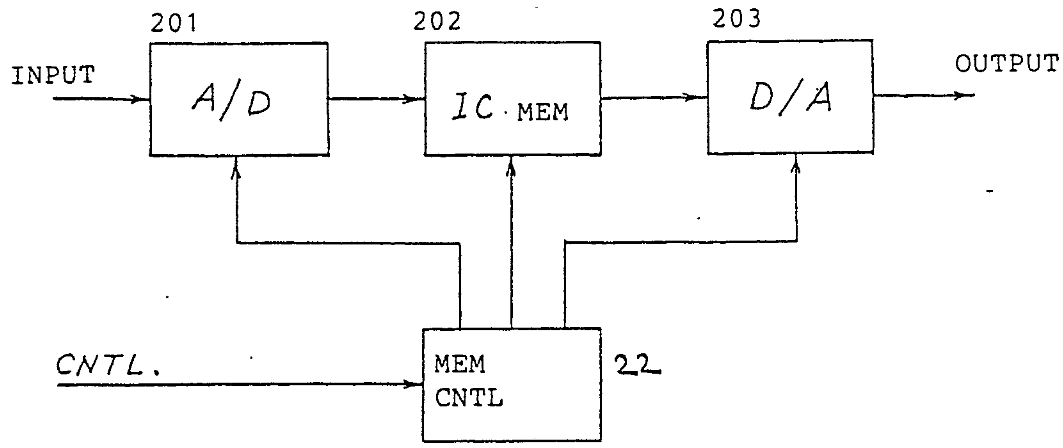

FIG. 21